# EUROPEAN PATENT APPLICATION

(11) **EP 2 487 539 A1**
(43) Date of publication of application: **15.08.2012**
(21) Application number: 10822110.2
(22) Date of filing: 07.10.2010
(51) Int. Cl.: G02F 1/1368, G02F 1/1339, G09F 9/30

(54) **LIQUID CRYSTAL DISPLAY DEVICE AND METHOD FOR MANUFACTURING SAME**

(30) Priority: 08.10.2009 JP 2009234367
(71) Applicant: Sharp Kabushiki Kaisha, Osaka-shi, Osaka 545-8522 (JP)
(72) Inventor: MORIWAKI, Hiroyuki, Osaka-shi, Osaka 545-8522 (JP)
(74) Representative: Müller - Hoffmann & Partner
(86) International application number: PCT/JP2010/067688
(87) International publication number: WO 2011/043440

(57) **Abstract**

In the liquid crystal display device of the present invention, it is difficult for short circuit between an active matrix substrate and a counter substrate to occur. The liquid crystal display device includes a conduction preventing member (31) to prevent electrical conduction between an electrode film (19) to make a gate wiring (12) and a main wiring (14c) conductive in a contact hole (20) in the active matrix substrate (1) and an electrode film (23) as a common electrode of the counter substrate (2). The conduction preventing member (31) is provided, on at least one of the active matrix substrate (1) and the counter substrate (2), in a position at least partially overlapping the electrode film (19) in the substrate normal direction between the electrode film (19) of the active matrix substrate (1) and the electrode film (23) of the counter substrate (2).

## Description

### TECHNICAL FIELD

The present invention relates to a liquid crystal display device, and more particularly to a liquid crystal display device having a structure in which an active matrix substrate and a counter substrate are bonded together and liquid crystal is sealed therebetween, and a production method thereof.

### BACKGROUND ART

Conventionally, a liquid crystal display device in which an active matrix substrate and a counter substrate are bonded together and liquid crystal is enclosed between the substrates, i.e. a so-called liquid crystal display device of active matrix type is widely spread. On the active matrix substrate, a semiconductor device functioning as a driving element for liquid crystal (such as a thin-film transistors abbreviated as a TFT, for example), and wirings for controlling the semiconductor device are formed. On the other hand, on the counter substrate, a color filter and the like are formed as required, and a common electrode is formed on the entire surface thereof.

In a conventional liquid crystal display device of active matrix type, generally, external connection terminals for supplying a power source and a voltage are arranged on the side of the active matrix substrate. Therefore, for example, in order to supply the voltage supplied from the external connection terminal on the active matrix substrate to the common electrode on the counter electrode, it is necessary to establish electrical continuity between the active matrix substrate and the counter substrate.

As means for establishing electrical continuity between the active matrix substrate and the counter substrate, (1) a silver paste is placed between the active matrix substrate and the counter substrate (for example, see Patent Document No. 1), (2) the sealing material with which the active matrix substrate and the counter substrate are bonded together contains electrically conductive beads (for example, see Patent Document No. 2), and other means are known.

### CITATION LIST

### PATENT LITERATURES

Patent Document No. 1: Japanese Laid-open Patent Publication No. 8-234224
Patent Document No. 2: Japanese Laid-open Patent Publication No. 2000-199915

### SUMMARY OF INVENTION

### TECHNICAL PROBLEM

In recent years, especially in the field of large-screen liquid crystal display devices, progress has been made in development of a so-called monolithic panel in which, in a region of the active matrix substrate on the outside of the pixel region, a driver circuit is formed simultaneously by the production process of a semiconductor device in a pixel. In such a case, in the region in which the driver circuit and the wirings are arranged of the active matrix substrate on the outside of the pixel region (often referred to as a frame region), the wirings are often exposed on the surface of the active matrix substrate.

For this reason, when any pressure is applied on a panel surface by pushing the panel surface with a finger or the like, the cell gap between the active matrix substrate and the counter substrate is made smaller. This results in a problem that the wiring on the active matrix substrate and the common electrode of the counter substrate are sometimes short-circuited. As described in the above-mentioned Patent Document No. 2, in the case where electrical conduction between the substrates is obtained by using a sealing material containing electrically conductive beads, if the electrically conductive beads in the sealing material may enter a portion other than the conductive portion (for example, a contact portion between the main wiring and the other wiring (an electrode pattern), or the like), there arises a problem that the contact portion and the common electrode of the counter substrate are short-circuited.

In some cases, the alignment film in the pixel region is extendedly formed on the wiring or the electrode pattern on the outside of the pixel region in the active matrix substrate. The alignment film is extremely thin, i.e., the thickness is generally about 100 nm which cannot exhibit enough insulating property for preventing the dielectric breakdown between the active matrix substrate and the counter substrate when the cell gap is made smaller due to the applied pressure, or when the electrically conductive beads in the sealing material enter the contact portion or the like.

The present invention has been conducted in view of the above-mentioned problems, and the objective of the present invention is to provide a liquid crystal display device in which an active matrix substrate and a counter substrate are bonded together, and a liquid crystal display device in which it is difficult for short circuit between the substrates to occur.

### SOLUTION TO PROBLEM

The liquid crystal display device according to the present invention is a liquid crystal display device including a pixel region in which a plurality of pixel electrodes are formed, and a peripheral region positioned on the outside of the pixel region, and comprising an active matrix substrate and a counter substrate having a common electrode, wherein the active matrix substrate includes: a first wiring extended to the peripheral region; a first insulating layer formed on the first wiring; a second wiring extended onto the insulating layer in the peripheral region; a second insulating layer formed on the second wiring; and an electrode film, disposed in a through hole formed in the first insulating layer and the second insulating layer in the peripheral region, to electrically connect the first wiring and the second wiring, and between the active matrix substrate and the counter substrate in the peripheral region, a sealing material to bond the active matrix substrate and the counter substrate together, and a conduction preventing member, located in a position at least partially overlapping the electrode film, to prevent electrical conduction between the electrode film and the common electrode are provided.

The production method of a liquid crystal display device according to the present invention is a production method of a liquid crystal display device including a pixel region in which a plurality of pixel electrodes are formed and a peripheral region positioned on the outside of the pixel region, and comprising an active matrix substrate and a counter substrate having a common electrode, comprising the steps of: forming a first wiring extended to the peripheral region on the active matrix substrate; forming a first insulating layer on the first wiring of the active matrix substrate; forming a second wiring extended to the peripheral region on the first insulating layer of the active matrix substrate; forming a second insulating layer on the second wiring of the active matrix substrate; forming a through hole in the first insulating layer and the second insulating layer in the peripheral region; forming an electrode film to electrically connect the first wiring and the second wiring in the through hole; forming a common electrode on the counter substrate; forming a conduction preventing member to prevent electrical conduction between the electrode film and the common electrode on at least one of the active matrix substrate and the counter substrate; and bonding the active matrix substrate and the counter substrate together by means of a sealing material in such a manner that at least a part of the electrode film overlaps the conduction preventing member when viewed from a substrate normal direction of the active matrix substrate.

### ADVANTAGEOUS EFFECTS OF INVENTION

According to the present invention, it is possible to provide a liquid crystal display device formed by bonding an active matrix substrate and a counter substrate together in which it is difficult for short circuit between the substrates to occur.

### BRIEF DESCRIPTION OF DRAWINGS

[FIG. **1**] FIG. **1** is a plan view showing the configuration of a liquid crystal display device in a first embodiment of the present invention.
[FIG. **2**] FIG. **2** is an enlarged plan view showing the vicinity of a region **A** encircled by a dashed line in FIG. **1** in the liquid crystal display device in the first embodiment.
[FIG. **3**] FIG. **3** is a cross-sectional view taken along a line **B-B** shown in FIG. **2**.
[FIG. **4**] FIG. **4** is an enlarged plan view showing the vicinity of the region **A** encircled by the dashed line in FIG. **1** in a liquid crystal display device in a second embodiment.
[FIG. **5**] FIG. **5** is a cross-sectional view taken along a line **B-B** shown in FIG. **4**.
[FIG. **6**] FIG. **6** is a cross-sectional view taken along a line **C-C** shown in FIG. **4**.
[FIG. **7**] FIG. **7** is a cross-sectional view of a general configuration of a first modified example of a liquid crystal module **101.**
[FIG. **8]** FIG. **8** is a cross-sectional view of a general configuration of a second modified example of the liquid crystal module **101.**
[FIG. **9**] FIG. **9** is a cross-sectional view of a general configuration of a third modified example of the liquid crystal module **101.**
[FIG. **10**] FIG. **10** is a cross-sectional view of a general configuration of a fourth modified example of the liquid crystal module **101.**
[FIG. **11**] FIG. **11** is a cross-sectional view of a general configuration of a fifth modified example of the liquid crystal module **101.**
[FIG. **12**] FIG. **12** is a cross-sectional view of a general configuration of a sixth modified example of the liquid crystal module **101.**
[FIG. **13**] FIG. **13** is a cross-sectional view showing the configuration in the vicinity of a conductive portion **41** in the second modified example in more detail.
[FIG. **14**] FIG. **14** is a cross-sectional view showing the configuration in the vicinity of a contact portion **42** in the second modified example in more detail.
[FIG. **15**] FIG. **15** illustrates a cross-sectional configuration (a cross-sectional configuration of a pixel) taken along a line **D-D** shown in FIG. **1****.**
[FIG. **16**] FIG. **16** is a cross-sectional view taken along the line **D-D** shown in FIG. **1** and showing the configuration in which an alignment regulating structure is formed in a pixel region.
[FIG. **17**] FIG. **17** is a plan view schematically illustrating the configuration of a TFT **30** and a contact portion **63** in the vicinity thereof in a gate driver **4a**.
[FIG. **18]** FIG. **18** is a cross-sectional view taken along a line **E-E** shown in FIG. **17****.**
[FIG. **19]** FIG. **19** is a cross-sectional view of a general configuration of a liquid crystal module in a comparative example to the second embodiment.

### DESCRIPTION OF EMBODIMENTS

A liquid crystal display device in one embodiment of the present invention is a liquid crystal display device including a pixel region in which a plurality of pixel electrodes are formed and a peripheral region positioned on the outside of the pixel region, and including an active matrix substrate and a counter substrate having a common electrode, wherein the active matrix substrate includes a first wiring extended to the peripheral region, a first insulating layer formed on the first wiring, a second wiring extended onto the first insulating layer in the peripheral region, a second insulating layer formed on the second wiring, and an electrode film, disposed in a through hole formed in the first insulating layer and the second insulating layer, to electrically connect the first wiring and the second wiring, and between the active matrix substrate and the counter substrate in the peripheral portion, a sealing material to bond the active matrix substrate and the counter substrate together and a conduction preventing member, located in a position at least partially overlapping the electrode film when viewed from a substrate normal direction of the active matrix substrate, to prevent electrical conduction between the electrode film and the common electrode are provided.

In the liquid crystal display device with the above-described configuration, the first wiring and the second wiring are connected by the electrode film via the through hole in the peripheral region of the active matrix substrate on the outside of the pixel region. Between the active matrix substrate and the counter substrate in the peripheral region, in addition to the sealing material to bond the active matrix substrate and the counter substrate together, the conduction preventing member to prevent electrical conduction between the electrode film and the common electrode of the counter substrate is provided in the position at least partially overlapping the electrode film when viewed from the substrate normal direction of the active matrix substrate. With such a configuration, when any pressure is applied from the external of the substrate, or when any conducting substance is interposed between the electrode film of the active matrix substrate and the common electrode of the counter substrate, it is possible to effectively suppress the occurrence of the resulting short circuit between the substrates by means of the conduction preventing member. As a result, it is possible to provide a liquid crystal display device formed by bonding an active matrix substrate and a counter substrate together in which it is difficult for short circuit between the substrates to occur.

In the above-described liquid crystal display device, alternatively, the conduction preventing member may have a form in contact with both of the electrode film and the common electrode, or may have a form in contact with only one of the electrode film and the common electrode. In the former form, there is little space between the conduction preventing member and the electrode film or the common electrode into which any conducting substance enters, so that short circuit can be more surely prevented. Moreover, the conduction preventing member also functions as a spacer on the outside of the pixel region, so that the gap between the active matrix substrate and the counter substrate can be maintained in the region on the outside of the pixel region. On the other hand, in the latter form, the height of the conduction preventing member is smaller than the cell gap, so that there is an advantage that in the case where any material enters between the conduction preventing member and the electrode film or the common electrode opposed thereto, the thickness of the substrate in that position is less increased.

In the above-described liquid crystal display device, it is preferred that the conduction preventing member has an end face which is opposed to the active matrix substrate without being in contact with the active matrix substrate, and that the end face of the conduction preventing member is formed to have concave and convex. With such a configuration, in the case where the sealing material or the like enters between the conduction preventing member and the electrode film or the common electrode opposite thereto, the entered material is absorbed into the space of the concavity, so that it is possible to prevent the increase in substrate thickness in that position, advantageously.

The above-described liquid crystal display device preferably includes a driving circuit disposed on the active matrix substrate in the peripheral region, and a second conduction preventing member disposed between the active matrix substrate and the counter substrate in the peripheral portion and disposed in a position overlapping the driving circuit when viewed from the substrate normal direction of the active matrix substrate. By means of the second conduction preventing member, short circuit between the wiring in the driving circuit and the electrode on the counter substrate can be suppressed. In the above-described preferred configuration, more preferably, the second conduction preventing member is black, and a channel region of the driving circuit and the second conduction preventing member are arranged to at least partially overlap when viewed from the substrate normal direction of the active matrix substrate. In such an embodiment, the conduction preventing member functions as a light blocking layer for a driving element in the driving circuit, and the characteristic deterioration of the driving element can be suppressed.

Preferably, the above-described liquid crystal display device further includes a projecting structure provided between the active matrix substrate and the counter substrate in the pixel region, and the conduction preventing member is formed from the same material as that of the projecting structure. With such a configuration, since the conduction preventing member and the projecting structure are made from the same material, the production process can be simplified. In addition, the projecting structure may preferably be a spacer defining the gap between the active matrix substrate and the counter substrate. Alternatively, it is preferred that the projecting structure may be an alignment regulating structure to define the alignment condition of liquid crystal. At this time, it is preferred that the projecting structure and the conduction preventing member are disposed in the same layer of the active matrix substrate. Specifically, the active matrix substrate is formed by sequentially laminating various layers of metal, resin, or the like on a light-transmitting substrate such as a glass substrate. The projecting structure and the conduction preventing member are preferably provided in the same layer of the layered structure.

In the above-described liquid crystal display device, it is preferred that the sealing material may include a conductive particulate matter and may be disposed additionally between the electrode film and the common electrode on the counter substrate. With such a configuration, the conduction preventing member prevents the conductive particulate matter from entering between the electrode film of the active matrix substrate and the common electrode on the counter electrode, so that short circuit between the substrates can be effectively suppressed.

In addition, in the above-described liquid crystal display device, preferably, a stepped portion is formed on a surface of the second insulating layer in the through hole, and an end portion of the electrode film is positioned on the stepped portion. With such a configuration, the distance between the electrode film and the common electrode on the counter substrate can be sufficiently ensured. Accordingly, it is advantageous that short circuit between the electrode film of the active matrix substrate and the common electrode of the counter substrate can be more surely prevented.

The production method of the liquid crystal display device in one embodiment of the present invention is a production method of a liquid crystal display device including a pixel region in which a plurality of pixel electrodes are formed and a peripheral region positioned on the outside of the pixel region and including an active matrix substrate and a counter substrate having a common electrode, the method including: (a) a step of forming a first wiring extended to the peripheral region on the active matrix substrate; (b) a step of forming a first insulating layer on the first wiring of the active matrix substrate; (c) a step of forming a second wiring extended to the peripheral region on the first insulating layer of the active matrix substrate; (d) a step of forming a second insulating layer on the second wiring of the active matrix substrate; (e) a step of forming a through hole in the first insulating layer and the second insulating layer in the peripheral portion; (f) a step of forming an electrode film to electrically connect the first wiring and the second wiring; (g) a step of forming a common electrode on the counter substrate; (h) a step of forming a conduction preventing member to prevent electrical conduction between the electrode film and the common electrode from occurring on one of the active matrix substrate and the counter substrate; and (i) a step of bonding the active matrix substrate and the counter substrate together by means of a sealing material in such a manner that at least part of the electrode film overlaps the conduction preventing member when viewed from the substrate normal direction of the active matrix substrate. In the production method, it is not necessary for the steps (a) to (i) to be performed in the order of the alphabets.

In the liquid crystal display device produced by the method, the conduction preventing member prevents the electrode film and the common electrode on the counter substrate from being electrically conductive, so that even in the case where any pressure is applied from the outside or in the case where some conducting substance is interposed between the electrode film of the active matrix substrate and the common electrode on the counter substrate, it is possible to effectively suppress the resulting short circuit between the substrates. As a result, it is possible to realize a liquid crystal display device, produced by bonding an active matrix substrate and a counter substrate together, in which it is difficult for the short circuit between the substrates to occur.

The above-described method may further include a step of forming a projecting structure in the pixel region of at least one of the active matrix substrate and the counter substrate. Preferably, the material of the conduction preventing member and the material of the projecting structure are the same, and the step of forming the projecting structure and the step of forming the conduction preventing member are simultaneously performed. According to the method, the conduction preventing member is formed from the same material as that of the projecting structure in the pixel region, and formed simultaneously with the projecting structure, so that it is advantageous that the complication of production method can be suppressed.

Hereinafter, with reference to the accompanying drawings, preferred embodiments of liquid crystal display devices of the present invention will be described. For simplicity's sake, in the drawings referred to below, the configuration is shown in a simplified manner or a schematic manner, or some of structural members are omitted. Moreover, the ratio of size between the structural members shown in the respective figures does not necessarily correspond to the actual ratio of size.

### (Embodiment 1)

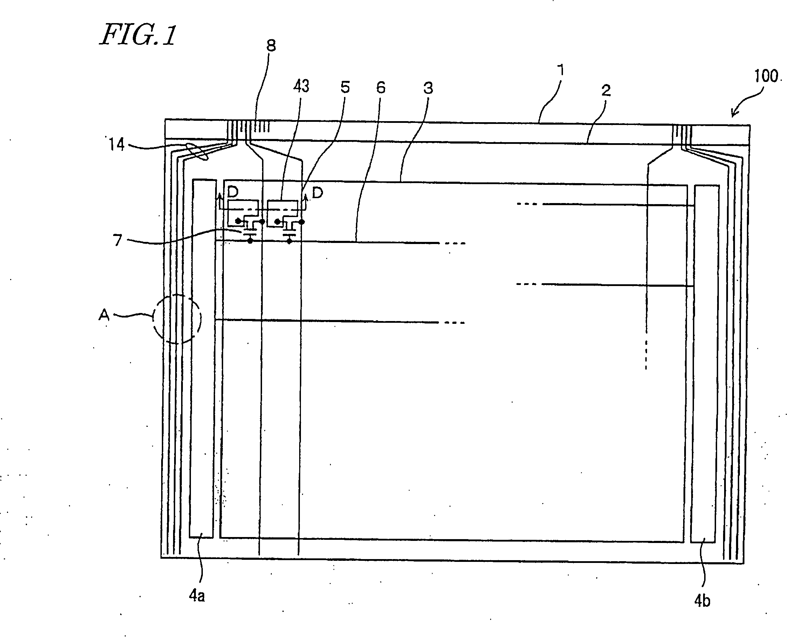

FIG. **1** is a plan view schematically showing the general configuration of a liquid crystal module (a liquid crystal display device) in a first embodiment of the present invention. As shown in FIG. **1****,** the liquid crystal module **100** in the first embodiment includes an active matrix substrate **1** and a counter substrate **2.** The active matrix substrate **1** and the counter substrate **2** are bonded together by a sealing material (not shown) with a predetermined gap kept by means of a photo spacer (a projecting structure) disposed in a pixel region. Liquid crystal is sealed in a space formed by the active matrix substrate **1,** the counter substrate **2,** and the sealing material.

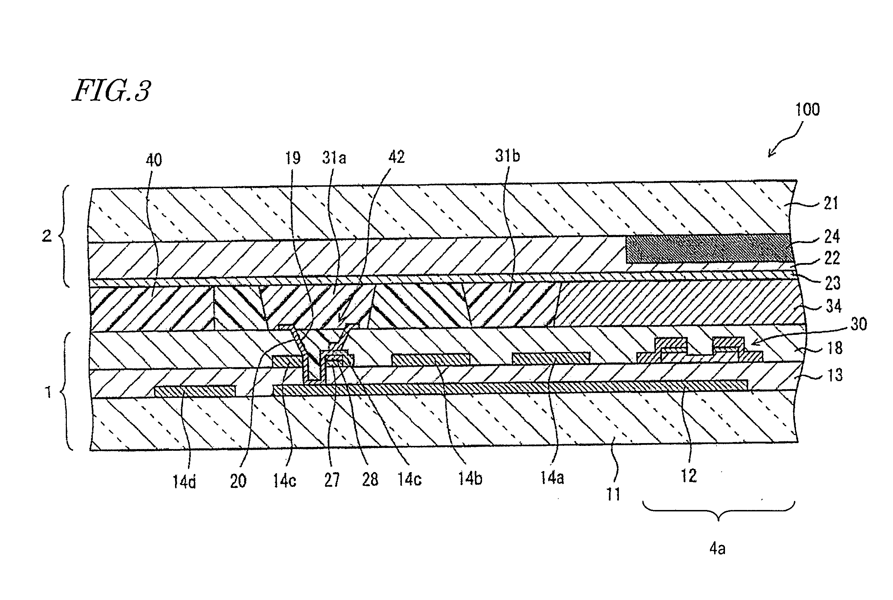

The active matrix substrate **1** has a pixel region **3** in which pixel electrodes **43** are arranged in a matrix, and gate drivers **4a** and **4b** disposed on both sides of the pixel region **3** (in the example shown in FIG. **1****,** on both sides in a horizontal direction (a longitudinal direction)). In the pixel region **3,** a source wiring **5** and a gate wiring **6** are disposed so as to be mutually orthogonal. In the vicinity of an intersecting point of the source wiring **5** and the gate wiring **6,** a thin film transistor (TFT) **7** is formed. Although the inner construction of the gate drivers **4a** and **4b** is not shown in FIG. **1****,** it includes a switching element (a TFT **30** shown in FIG. **3****)** which is formed simultaneously with the production process of the TFT **7** in the pixel region **3.** Specifically, the gate drivers **4a** and **4b** are formed in a monolithic manner in the active matrix substrate **1.**

As for the TFT **7,** the gate electrode is connected to the gate wiring **6,** the source electrode is connected to the source wiring **5,** and the drain electrode is connected to the pixel electrode **43,** respectively. A gate signal is applied from the gate drivers **4a** and **4b** to the gate electrode of the TFT **7** via the gate wiring **6,** thereby controlling the ON/OFF state of the TFT **7.** To the source electrode of the TFT **7,** a data signal is applied from a source driver which is not shown via the source wiring **5.**

The active matrix substrate **1** is formed in such a manner that the length of the shorter side is larger than the length of the shorter side of the counter substrate **2.** In a portion of the active matrix substrate **1** which is not covered with the counter substrate **2,** a terminal region **8** for inputting and outputting various signals between the active matrix substrate **1** and an external circuit is formed. For example, each source wiring **5** is connected to a source driver (not shown) provided on the outside of the active matrix substrate **1** via a source driver connecting terminal formed in the terminal region **8.** In FIG. **1****,** terminals of the terminal region **8** are not shown, but one terminal, or two or more terminals may be formed in the terminal region **8.**

As shown in FIG. **1****,** on the outside of the gate drivers **4a** and **4b** (on the outer circumferential side of the substrate), main wirings **14** are drawn around. It is understood that FIG. **1** shows one exemplary formation of the main wirings **14,** so that any other formation in which the number of main wirings is different can be adopted. The main wirings **14** are connected to the terminals of the terminal region **8.** Although the main wirings **14** will be described in detail later, the main wirings **14** are formed from the same material as that of the source wiring **5** or the gate wiring **6** of the pixel region **3** and formed simultaneously with the source wiring **5** or the gate wiring **6.** The sealing material is laid on the outside of the gate driver **4a** (on the outer circumferential side of the substrate) so as to cover one or more of the main wirings **14.** The region, positioned on the outside of the pixel region, in which the gate drivers **4a** and **4b,** the main wirings **14,** the terminal region **8,** and the like are arranged is referred to as a peripheral region in the present specification.

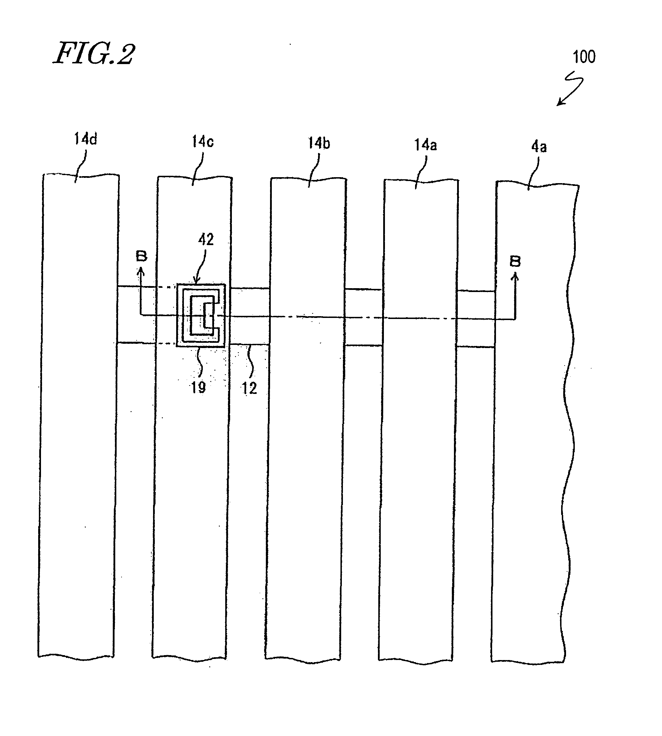

FIG. **2** is an enlarged plan view showing the vicinity of the region **A** encircled by a dashed line in FIG. **1****.** As shown in FIG. **2****,** on the outside of the gate driver **4a** (on the outer circumferential side of the substrate), a plurality of main wirings **14a** to **14d** are arranged. In the example of FIG. **2****,** on the main wiring **14c,** a contact portion **42** with a gate wiring **12** (a first wiring: a wiring for supplying a source voltage and a signal to the gate driver **4a)** connected to the gate driver **4a** is provided.

The structure of the contact portion **42** will be described with reference to FIG. **3.** FIG. **3** is a cross-sectional view, taken along a line **B-B** shown in FIG. **2****,** showing the sectional structure of the contact portion **42.** FIG. **3** shows the sectional structure of the contact portion **42** in a simplified manner. For example, the main wiring **14** preferably has a layered structure including a plurality of kinds of metal layers, but in FIG. **3****,** the main wiring **14** is shown as a metal layer of a single layer in an abbreviated manner. Also in FIG. **3****,** the illustration of a passivation film or the like is omitted, for example. In addition, the degree of evenness of various films, the size ratio of structural members, and the like shown in FIG. **3** do not necessarily represent the actual conditions.

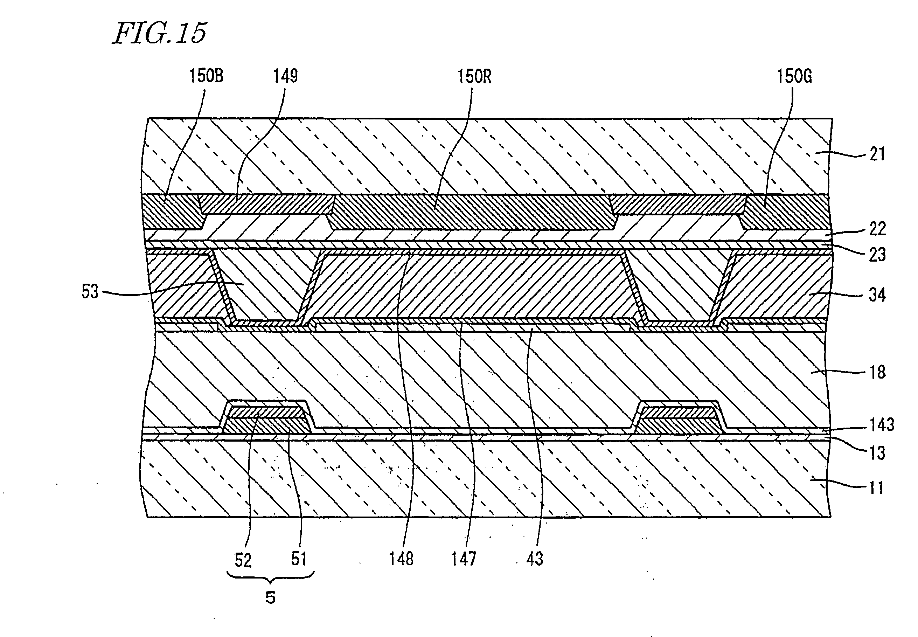

As shown in FIG. **3****,** the liquid crystal module **100** in the present embodiment has the configuration in which the active matrix substrate **1** and the counter substrate **2** are bonded together by the sealing material **40,** and the liquid crystal **34** is sealed in the gap therebetween. As for the active matrix substrate **1** and the counter substrate **2,** the gap therebetween is maintained by a columnar or wall-like photo spacer (the projecting structure) having a uniform height provided in the pixel region **3.** The photo spacer is generally formed by a resin or the like so as to overlap the source wiring **5** or the gate wiring **6,** while avoiding an opening portion of the pixel. The detailed embodiment of the photo spacer will be described later with reference to FIG. **15****.**

As the material for the sealing material **40,** a thermosetting resin can be used. Preferably, the sealing material **40** additionally has photo-curing property. Because after the active matrix substrate **1** and the counter substrate **2** are positioned and bonded together, it is possible to temporarily harden the sealing material **40** by exposure to light, and then to finally harden the sealing material **40** by heating. As a resin having such properties, a mixed resin of an epoxy resin and an acrylic resin, or the like is available. As the sealing material **40,** a photo-curing resin may be used.

As shown in FIG. **3****,** the active matrix substrate **1** includes a glass substrate **11** and a gate wiring **12** (a first wiring) formed on the surface of the glass substrate **11.** The gate wiring **12** is connected to a gate electrode of the TFT **30** in the gate driver **4a.** The gate wiring **12** is formed from the same material as that of the gate wiring **6** in the pixel region **3** simultaneously with the gate wiring **6** by the process for forming the gate wiring **6.** Preferably, the gate wirings **6** and **12** have, for example, a three-layer structure of a titanium layer, an aluminum layer, and a titanium layer. The structure is not limited to this. Alternatively, the gate wirings **6** and **12** may be a single metal layer, or may be a metal layer having two layers or four or more layers. Alternatively, instead of aluminum, a metal of molybdenum or the like may be used, for example. The gate wiring **12** is covered with an interlayer insulating film **13** (a first insulating layer). The interlayer insulating film **13** is also referred to as a gate insulating film, and a silicon nitride film may be suitably used.

On the interlayer insulating film **13,** a main wiring **14 (14a** to **14c:** a second wiring) is provided. The main wirings **14a** to **14c** are formed from the same material as that of the source wiring **5** in the pixel region **3** simultaneously with the source wiring **5** by the process for forming the source wiring **5.** The source wiring **5** and the main wirings **14a** to **14c** preferably have a two-layer structure in which an aluminum layer is layered on a titanium layer, but the structure is not limited to this. Alternatively, the source wiring **5** and the main wirings **14a** to **14c** may be a single metal layer, or a metal layer of three or more layers. Instead of aluminum, molybdenum or the like may be used, for example. In the present embodiment, a main wiring **14d** of the active matrix substrate **1** is electrically connected to a common electrode (described later) of the counter substrate **2** via silver paste (not shown) provided at an appropriate location.

On the main wiring **14** and the TFT **30,** an interlayer insulating film **18** (a second insulating layer) is provided. In the pixel region **3,** on the surface of the interlayer insulating film **18,** a pixel electrode **43** formed from a transparent electrode film such as indium tin oxide (ITO) or the like, and an alignment film (not shown) to regulate the alignment of liquid crystal **34** are provided in the known modes.

On the other hand, the counter substrate **2** includes a color filter (which is not illustrated in FIG. **3****)** disposed on a glass substrate **21,** and further includes an overcoat film **22** for covering the color filter and a transparent electrode film **23.** The electrode film **23** covers the entire surface of the counter substrate **2** and functions as the common electrode. In the pixel region **3,** on the surface of the electrode film **23** of the counter substrate **2,** an alignment film (not shown) to regulate the alignment of the liquid crystal **34** is provided. In the counter substrate **2,** in the region opposed to the gate driver **4a,** a light blocking layer (a black matrix) **24** is provided in order to prevent the characteristics of the TFT **30** in the gate driver **4a** from being deteriorated by light.

As shown in FIG. **3****,** in the contact portion **42,** a through hole (a contact hole) **20** which is formed through the interlayer insulating film **18** and the interlayer insulating film **13** on the main wiring **14c** is provided. Via the through hole **20** and the electrode film **19,** the main wiring **14c** and the gate wiring **12** are electrically connected. Specifically, the electrode film **19** is continuously layered on the interlayer insulating film **18** in the contact portion **42,** on wall faces of the interlayer insulating film **13,** the main wiring **14c** and the interlayer insulating film **18** in the through hole **20,** and on the gate wiring **12** exposed in the bottom portion of the through hole **20.**

The electrode film **19** shown in FIG. **3** is formed from the same material as that of the pixel electrode **43** (ITO, for example) in the pixel region **3** simultaneously with the pixel electrode **43.** The structural element indicated by the reference numeral **27** in FIG. **3** is a lower semiconductor layer, and the structural element indicated by the reference numeral **28** is an upper semiconductor layer. The lower semiconductor layer **27** and the upper semiconductor layer **28** can be, for example, formed simultaneously when the semiconductor layer of the TFT **30** is formed. In the case where the lower semiconductor layer **27** and the upper semiconductor layer **28** are exposed in the through hole **20,** the electrode film **19** is formed on the wall faces of these layers.

A conduction preventing member **31a** formed by an insulating resin is formed on the electrode film **23** of the counter substrate **2** in the contact portion **42** shown in FIG. **3****,** and a conduction preventing member **31b** is formed on the inner side (on the side closer to the TFT **30)** of the contact portion **42.** In the following description, in the case where the conduction preventing members **31a** and **31b** are required to be distinctively explained, the reference numerals **31a** and **31b** are used. In the case where the conduction preventing members **31a** and **31b** are commonly explained, the reference numeral **31** is used. The conduction preventing member **31** is a different structure from the sealing material **40.** Alternatively, between the electrode film **23** and the conduction preventing member **31,** an alignment film (not shown) extended from the pixel region **3** may be interposed. It is necessary to provide the conduction preventing member **31** in the condition where at least part of the conduction preventing member **31** overlaps the electrode film **19** of the active matrix substrate **1** in the normal direction of the substrate surface (in the direction perpendicular to the substrate surface) (when viewed from the normal direction of the substrate surface). In the example shown in FIG. **3****,** the conduction preventing member **31a** is provided so as to overlap the entire surface of the electrode film **19** in the normal direction of the substrate surface, and the conduction preventing member **31b** is provided in a position which does not overlap the electrode film **19.** However, the conduction preventing member **31b** in the position which does not overlap the electrode film **19** can be omitted, and the conduction preventing member **31a** does not necessarily overlap the entire surface of the electrode film **19.** Herein only the conduction preventing members **31a** and **31b** are shown, but the number of conduction preventing members is not limited to this. The conduction preventing member **31** is formed in a columnar shape or a wall-like shape by using the same material as that of the projecting structure (the photo spacer herein) provided in the pixel region **3.** The conduction preventing member **31** and the photo spacer can be simultaneously formed by a photolithography process by using a material of transparent photosensitive acrylic resin, for example.

It is preferred that an end face of the conduction preventing member **31a** on the side of the active matrix substrate **1** has a width and a length sufficient for at least covering the electrode film **19** in the contact portion **42.** In the example shown in FIG. **3****,** the conduction preventing member **31a** is disposed so as to be projected from the surface of the electrode film **23** of the counter substrate **2.** When the active matrix substrate **1** and the counter substrate **2** are bonded together, the conduction preventing member **31a** lies between these substrates with no space interposed therebetween. With such a configuration, even when any pressure is applied on the substrate, it is possible to prevent the electrode film **19** of the active matrix substrate **1** from coming into contact with the common electrode (the electrode film **23)** of the counter substrate **2.** Accordingly, with such a configuration, it is possible to advantageously prevent short circuit between the active matrix substrate **1** and the counter substrate **2** in the contact portion **42** from occurring.

The conduction preventing member **31** also has an effect functioning as the photo spacer to define the cell gap in the pixel region **3.** Accordingly, in the case where the conduction preventing member **31** is formed from the same material as that of the photo spacer to define the cell gap, as shown in FIG. **3****,** the conduction preventing member 31b is preferably formed in a portion other than the contact portion **42** on the outside of the pixel region **3.** With such a configuration, it is possible to attain an effect that the conduction preventing member **31b** keeps the gap between the active matrix substrate **1** and the counter substrate **2** uniform on the outside of the pixel region **3.**

Preferably, as described above, the conduction preventing member **31** is formed from the same material as that of the photo spacer to maintain the predetermined gap between the active matrix substrate **1** and the counter substrate **2** in the pixel region **3** simultaneously with the photo spacer. In such a case, the conduction preventing member 31 can advantageously be formed without increasing the number of production processes.

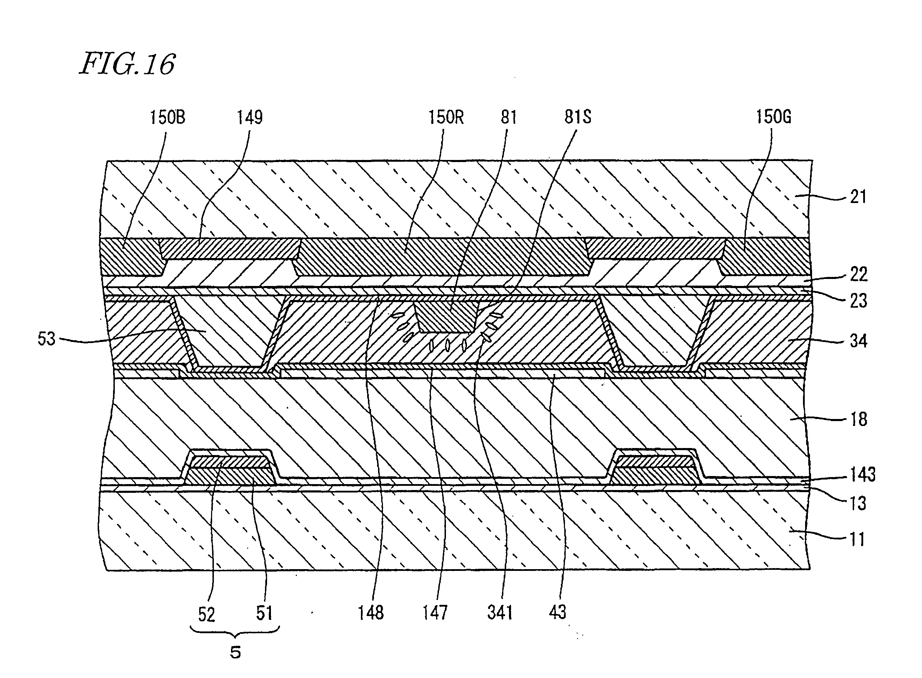

In some cases, as the projecting structure provided in the pixel region **3,** other than the photo spacer to define the gap between the substrates, an alignment regulating structure to regulate the alignment condition of liquid crystal may be provided. The alignment regulating structure is used, for example, in a vertical alignment type liquid crystal module, or the like. In general, the alignment regulating structure is formed in a wall-like shape having a predetermined height by using a transparent resin. One detailed example of the alignment regulating structure will be described later with reference to FIG. **16****.** In the case of the liquid crystal module including the alignment regulating structure as the projecting structure in the pixel region, the conduction preventing member **31** can be formed from the same material as that of the alignment regulating structure, unlike the photo spacer to define the gap between the substrates.

The conduction preventing member **31** can be formed from a material different from that of the photo spacer, and can be formed by a process different from the process of the photo spacer. In addition, the conduction preventing member **31** can be formed from a material different from that of the alignment regulating structure, and can be formed by a process different from the process of the alignment regulating structure.

As described above, in the liquid crystal display device in the first embodiment, the conduction preventing member **31** is formed on the common electrode (the electrode film **23)** of the counter substrate **2** so as to at least partially overlap the electrode film **19** on the outside of the pixel region **3** of the active matrix substrate **1** in the normal direction of the substrate surface. With such a configuration, even in the case where any pressure is applied on the substrate on the outside of the pixel region 3, it is possible to prevent the electrode film **19** of the active matrix substrate **1** and the electrode film **23** of the counter substrate **2** from coming into contact with each other. Accordingly, it is possible to prevent short circuit between the active matrix substrate **1** and the counter substrate **2** in the contact portion **42** from occurring.

### (Embodiment 2)

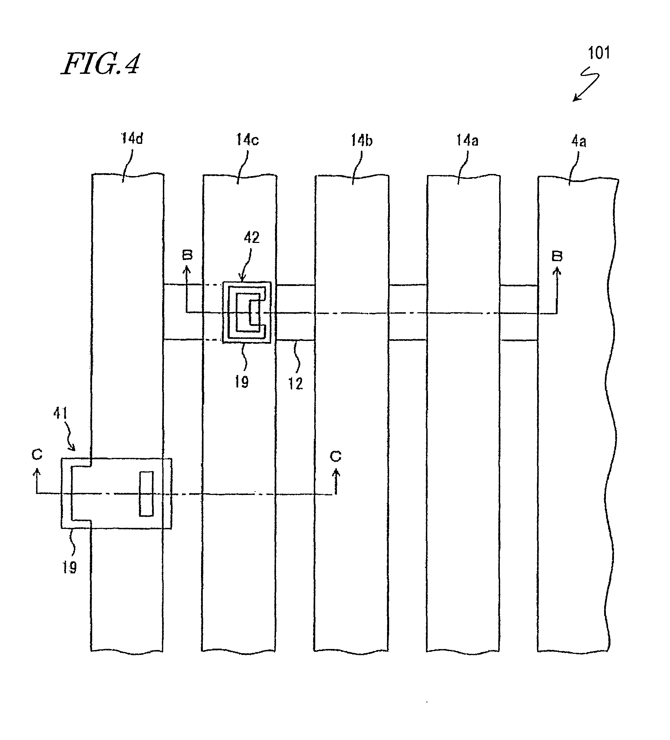

The second embodiment of the present invention will be described with reference to FIG. **4** to FIG. **6****.** In the following description, components having the same functions as those of the components described in the first embodiment are indicated by the same reference numerals, and the detailed descriptions thereof are omitted.

FIG. **4** is an enlarged plan view showing the vicinity of a region corresponding to the region **A** encircled by the dashed line in FIG. **1** in a liquid crystal display device (a liquid crystal module) **101** in the second embodiment. The general configuration of the liquid crystal display device **101** is fundamentally the same as that of the liquid crystal display device **100** shown in FIG. **1****.**

As shown in FIG. **4****,** in the liquid crystal display device **101** in the present embodiment, a conductive portion **41** to obtain electrical conduction between the active matrix substrate **1** and the counter substrate **2** is provided on the main wiring **14d.** In the liquid crystal display device **101** in the present embodiment, the sealing material **40** contains a conductive particulate matter (described later), and by the provision of the sealing material **40** in the conductive portion **41,** electrical conduction between the active matrix substrate **1** and the counter substrate **2** can be obtained via the conductive particulate matter. Accordingly, the silver paste included in the configuration of the first embodiment is not required, and the area of the frame region can be advantageously reduced as compared with the first embodiment. Alternatively, the conductive portion **41** may be provided on the main wiring **14d** in the frame portion closer to the terminal region **8** or in the frame portion on the opposite side to the terminal region **8.** On the main wiring **14c,** similarly to the first embodiment, the contact portion **42** with the gate wiring **12** connected to the gate driver **4a** is provided.

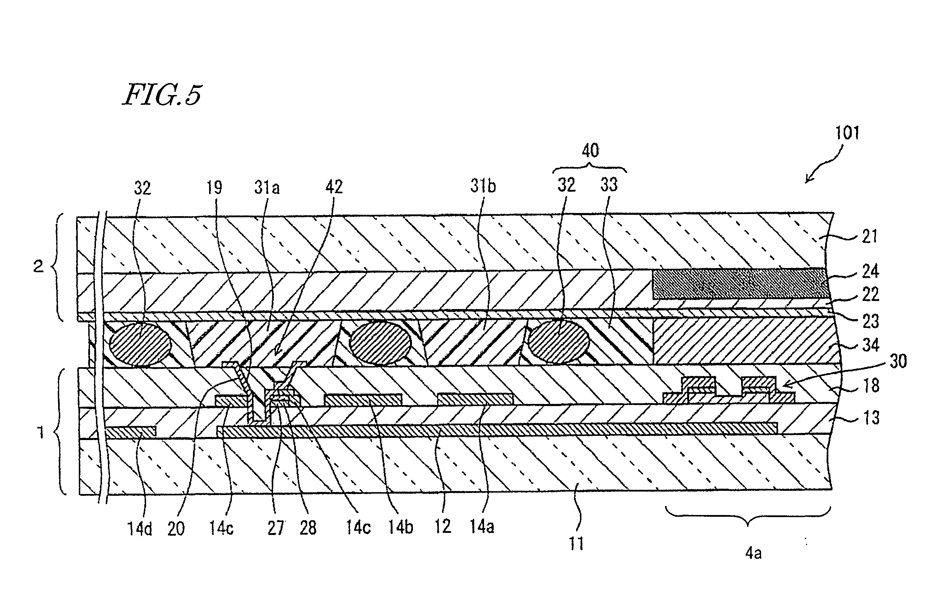

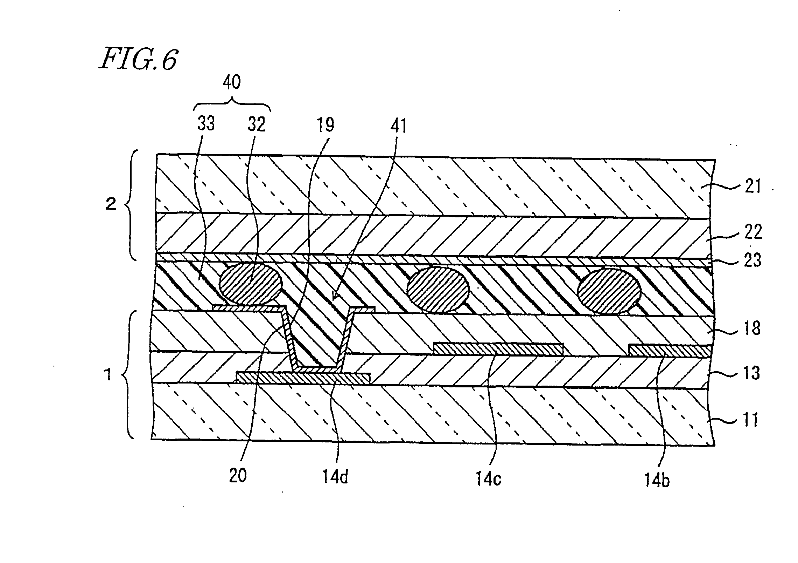

With reference to FIG. **5** and FIG. **6****,** the structure of the contact portion **42** and the conductive portion **41** will be described. FIG. **5** is a cross-sectional view, taken along a line **B-B** shown in FIG. **4****,** showing the sectional structure of the contact portion **42.** FIG. **6** is a cross-sectional view, taken along a line **C-C** shown in FIG. **4****,** showing the sectional structure of the conductive portion **41.** FIG. **5** and FIG. **6** show the sectional structures of the conductive portion **41** and the contact portion **42** in a simplified manner. For example, it is preferred that the main wiring **14** has a layered structure of a plurality of kinds of metal layers. However, in FIG. **5** and FIG. **6****,** the main wiring **14** is shown as a single metal layer in the abbreviated manner. In FIG. **5** and FIG. **6****,** the illustration of the passivation film or the like is omitted, for example. In FIG. **5** and FIG. **6****,** the degrees of evenness of various films, the size ratio of the structural members, and the like do not necessarily represent the actual conditions.

As shown in FIG. **5** and FIG. **6****,** the liquid crystal module (the liquid crystal display device) **101** in the present embodiment has the configuration in which the active matrix substrate **1** and the counter substrate **2** are bonded together by the sealing material **40,** and the liquid crystal **34** are sealed in the gap between the substrates. As for the active matrix substrate **1** and the counter substrate **2,** the gap between them is kept uniform by a photo spacer (a projecting structure) provided in the pixel region **3.** One detailed example of the photo spacer will be described later with reference to FIG. **15****.**

As for the sealing material **40,** a conductive particulate matter **32** is contained in a thermosetting resin **33** as a base material. The thermosetting resin **33** also has a photo-curing property, preferably. Because, after the active matrix substrate **1** and the counter substrate **2** are positioned and then bonded together, the sealing material **40** can be temporarily hardened by exposure to light, and then the sealing material **40** can be finally hardened by heating. As a resin having such properties, a mixed resin of an epoxy resin and an acrylic resin or the like is available. Although a transparent resin may be used as the thermosetting resin **33,** a black resin may sometimes be preferable as in a modified example (the fifth modified example) which will be described later.

As for the conductive particulate matter **32,** for example, plastic beads are plated with a conductive metal (for example, gold plating, or the like). The conductive particulate matter **32** has a substantially spherical form before being mixed into the thermosetting resin **33,** but it is preferred that the conductive particulate matter **32** may have a plastic property to a degree with some collapse but without being broken in the bonding process of the active matrix substrate **1** and the counter substrate **2.** As the plastic beads which are the core of the conductive particulate matter **32,** a thermoplastic resin such as an epoxy resin or the like may preferably be used, for example. This is because in the final hardening process in the bonding of the active matrix substrate **1** and the counter substrate **2,** the conductive particulate matter **32** can be interposed between the active matrix substrate **1** and the counter substrate **2** without being broken. The shape of the conductive particulate matter **32** is not limited to the substantially spherical form, but may be an ovoid shape (substantially ellipse in section), or a columnar shape. Alternatively, the conductive particulate matter **32** may be a particulate matter having a shape of quadrangle, polygon, or a different complicated shape in section.

As shown in FIG. **5** and FIG. **6****,** on the interlayer insulating film **13,** the main wiring **14 (14a** to **14c)** are provided. The main wirings **14a** to **14c** are formed from the same material as that of the source wiring **5** in the pixel region **3** simultaneously with the source wiring **5** by the process of forming the source wiring **5.** The main wiring **14d** is formed from the same material as that of the gate wiring **6** under the interlayer insulating film **13** simultaneously with the gate wiring **6** by the process of forming the gate wiring **6.**

As shown in FIG. **6****,** in the conductive portion **41,** a through hole (a contact hole) **20** is formed in the interlayer insulating film **13** on the main wiring **14d** and the interlayer insulating film **18.** Via the through hole **20,** the main wiring **14d** is electrically connected to the electrode film **19** on the interlayer insulating film **18.** In other words, the electrode film **19** is continuously layered on the interlayer insulating film **18** in the conductive portion **41,** on the wall faces of the interlayer insulating films **13** and **18** in the through hole **20,** and on the main wiring **14d** exposed in the bottom portion of the through hole **20.**

In the present embodiment, the sealing material **40** is provided in a position which covers the main wirings **14a** to **14d,** or provided over a part of or all of the main wirings **14a** to **14d.** With such a configuration, the electrode film **19** of the conductive portion **41** is made to be electrically conductive to an electrode film **23** of the counter substrate **2** by means of the conductive particulate matter **32** in the sealing material **40.** Accordingly, a signal input from a terminal of the terminal region **8** to the main wiring **14d** is supplied to the common electrode of the counter substrate **2** via the electrode film **19** and the conductive particulate matter **32.**

On the other hand, as shown in FIG. **5****,** in the contact portion **42,** the through hole **20** is formed through the interlayer insulating film **18** on the main wiring **14c** and the interlayer insulating film **13,** and the main wiring **14c** and the gate wiring **12** are electrically connected via the through hole **20** and the electrode film **19.** That is, the electrode film **19** is continuously layered on the interlayer insulating film **18** in the contact portion **42,** on the wall faces of the interlayer insulating film **13,** the main wiring **14c,** and the interlayer insulating film **18,** and on the gate wiring **12** exposed in the bottom portion of the through hole **20.** In the case where a lower semiconductor layer **27** and an upper semiconductor layer **28** are exposed in the through hole **20,** the electrode film **19** is also formed on the wall faces of these layers. The electrode film **19** respectively shown in FIG. **5** and FIG. **6** is formed from the same material (e.g., ITO) as that of the pixel electrode **43** in the pixel region **3** simultaneously with the pixel electrode **43.**

On the contact portion **42** and in the vicinity thereof shown in FIG. **5****,** a conduction preventing member **31 (31a, 31b)** formed from an insulating resin is provided on the electrode film **23** of the counter substrate **2.** The conduction preventing member **31** is buried in the sealing material **40** in the example shown in FIG. **5** (or surrounded by the sealing material **40),** but the conduction preventing member **31** is a separate structural member from the sealing material **40.** Between the electrode film **23** and the conduction preventing member **31,** an alignment film (not shown) extended from the pixel region **3** may be interposed. It is necessary to provide the conduction preventing member **31** so as to at least partially overlap the electrode film **19** of the active matrix substrate **1** in the normal direction of the substrate surface.

In the example shown in FIG. **5****,** the conduction preventing member **31a** is provided so as to overlap the entire of the electrode film **19** in the normal direction of the substrate surface, and the conduction preventing member **31b** is provided in a position which does not overlap the electrode film **19.** However, the conduction preventing member **31b** may be omitted, and the conduction preventing member **31a** does not necessarily overlap the entire of the electrode film **19.** The conduction preventing member **31** is formed in a columnar or wall-like shape by using the same material as that of the projecting structure (the photo spacer herein) provided in the pixel region **3.** The conduction preventing member **31** and the photo spacer can be formed simultaneously by photolithography by using, for example, a transparent photosensitive acrylic resin as the material.

It is preferred that the end face of the conduction preventing member **31a** on the side of the active matrix substrate **1** may have a width and a length sufficient for covering at least the electrode film **19** of the contact portion **42.** In the example shown in FIG. **5****,** the conduction preventing member **31a** is provided so as to protrude from the surface of the electrode film **23** of the counter substrate **2.** When the active matrix substrate **1** and the counter substrate **2** are bonded together, the conduction preventing member **31a** is interposed between the substrates with no space. Accordingly, in the contact portion **42,** there is no space into which the sealing material **40** enters between the electrode film **19** of the active matrix substrate **1** and the common electrode (the electrode film **23)** of the counter substrate **2.** Accordingly, with such a configuration, in the contact portion **42,** it is possible to prevent a situation that the conductive particulate matter **32** in the sealing material **40** causes short circuit between the active matrix substrate **1** and the counter substrate **2** from occurring.

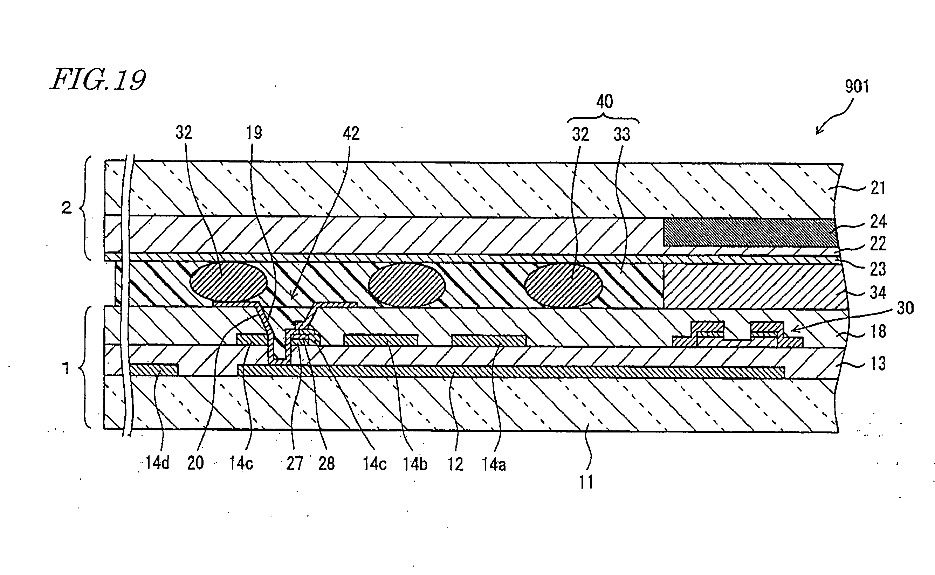

As a comparative example, FIG. **19** shows a configuration in which the conduction preventing member **31** is omitted from the liquid crystal module **101** in the present embodiment (a liquid crystal module **901).** The liquid crystal module **901** in the comparative example has the same configuration as that of the liquid crystal module **101** in the present embodiment except for the absence of the conduction preventing member **31.** As shown in FIG. **19****,** in the liquid crystal module **901** in the comparative example, the conductive particulate matter **32** contained in the sealing material **40** is interposed between the electrode film of the active matrix substrate **1** and the electrode film **23** of the counter substrate **2.** This may possibly cause short circuit between the active matrix substrate **1** and the counter substrate **2.** On the other hand, as described above, in the case of the liquid crystal module **101** in the present embodiment, the problem of short circuit between the active matrix substrate **1** and the counter substrate **2** by the conductive particulate matter **32** can be solved by the provision of the conduction preventing member **31.**

In addition, the conduction preventing member **31** also attains the effect that it has the similar function as a photo spacer to define a cell gap in the pixel region **3.** Accordingly, in the case where the conduction preventing member **31** is formed from the same material as that of the photo spacer to define the cell gap, as shown in FIG. **5****,** it is preferred to adopt a configuration in which the conduction preventing member **31b** is also provided in a position other than the contact portion **42** on the outside of the pixel region **3.** With such a configuration, it is possible to attain such an effect that the conduction preventing member **31b** may keep the space between the active matrix substrate **1** and the counter substrate **2** on the outside of the pixel region **3** uniform.

As described above, the conduction preventing member **31** is preferably formed from the same material as that of the photo spacer to maintain a predetermined gap between the active matrix substrate **1** and the counter substrate **2** in the pixel region **3,** simultaneously with the photo spacer. In this case, the conduction preventing member **31** can be advantageously formed without increasing the number of production process steps.

As the projecting structure provided in the pixel region **3,** other than the photo spacer to define the gap between the substrates, an alignment regulating structure to define the alignment condition of liquid crystal may sometimes be included. One detailed example of the alignment regulating structure will be described later with reference to FIG. **16****.** In the case of the liquid crystal module having the alignment regulating structure as the projecting structure in the pixel region, the conduction preventing member **31** can be formed from the same material as that of the alignment regulating structure, instead of the photo spacer to define the gap between the substrates.

Herein the conduction preventing member **31** may be formed from a material different from that of the above-mentioned photo spacer, and may be formed by a process step different from the step of forming the photo spacer. In addition, the conduction preventing member **31** may be formed from a material different from that of the above-mentioned alignment regulating structure, and may be formed by a process step different from the step of forming the alignment regulating structure.

As described above, in the liquid crystal display device in the second embodiment, the conduction preventing member **31** is provided on the common electrode (the electrode film **23)** of the counter substrate **2** so as to at least partially overlap the electrode film **19** on the outside of the pixel region of the active matrix substrate **1** in the normal direction of the substrate surface. Accordingly, even in the case where the sealing material **40** is disposed in a region in which the electrode film **19** is formed, the conductive particulate matter **32** contained in the sealing material **40** is prevented from entering between the electrode film **19** of the active matrix substrate **1** and the electrode film **23** of the counter substrate **2.** Accordingly, it is possible to prevent short circuit between the active matrix substrate **1** and the counter substrate **2** in the contact portion **42** from occurring.

As for the above-described liquid crystal module **100** in the first embodiment and the above-described liquid crystal module **101** in the second embodiment, some variations (modified examples) are suggested. The modified examples will be described below.

### (First Modified Example)

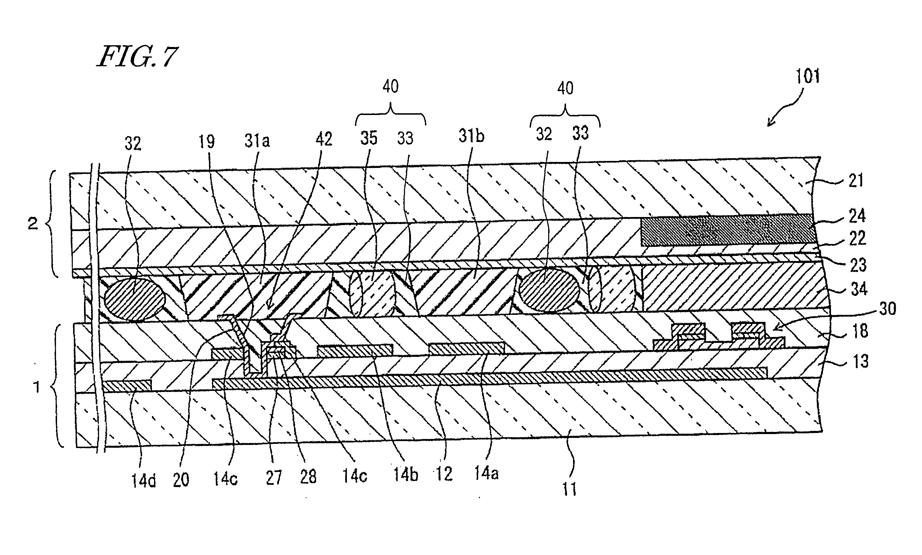

Fig. **7** is a cross-sectional view showing a general configuration of a first modified example of the liquid crystal module **101** in the second embodiment. As shown in FIG. **7****,** in the first modified example of the liquid crystal module **101,** a glass fiber (a spacer in seal) **35** which is cut into short pieces is mixed in the sealing material **40** together with the conductive particulate matter **32.** The glass fiber **35** has a columnar shape, and its diameter in section is smaller than that of the conductive particulate matter **32.** Unlike the conductive particulate matter **32,** the glass fiber **35** does not deform when the active matrix substrate **1** and the counter substrate **2** are bonded together. Alternatively, the glass fiber **35** is harder than the conductive particulate matter **32,** and has higher elastic modulus. Accordingly, the diameter in section of the glass fiber **35** defines the minimum gap between the active matrix substrate **1** and the counter substrate **2** in the portion in which the sealing material **40** is provided. It is preferred that the diameter (the diameter at least before the deformation or the diameter of the widest portion after the deformation) of the conductive particulate matter **32** is a little larger than the minimum gap (i.e., the diameter in section of the glass fiber **35).**

For example, in the case where the diameter in section of the glass fiber **35** is about 2 to 4 *µ*m, the diameter before the deformation or the diameter of the longest portion of the conductive particulate matter **32** is preferably larger than the diameter in section of the glass fiber **35** in the range of about 4 to 5 *µ*m. For example, when the diameter in section of the glass fiber **35** is about 3 *µ*m, the diameter of the conductive particulate matter **32** is preferably about 4 *µ*m. As described above, as the conductive particulate matter **32,** the particulate matter having a diameter which is a little larger than the diameter in section of the glass fiber **35** is used, so that both of the electrode film **19** of the active matrix substrate **1** and the electrode film **23** of the counter substrate **2** are surely in contact with a single conductive particulate matter **32** in the conductive portion **41.** Accordingly, in the conductive portion **41,** electrical conduction between the active matrix substrate **1** and the counter substrate **2** can be surely obtained.

As described above, according to the first modified example of the liquid crystal module **101,** since the glass fiber **35** is mixed in the sealing material **40,** the glass fiber **35** performs a function equivalent to the photo spacer to define the cell gap in the pixel region **3.** Accordingly, it is possible to attain the effect that the gap between the active matrix substrate **1** and the counter substrate **2** is kept uniform on the outside of the pixel region **3.**

In the present modified example, the columnar glass fiber 35 is used as the spacer in seal. Instead of the glass fiber, spherical rigid plastic beads may be used. Preferably, the plastic beads in this case have a diameter which is a little smaller than that of the conductive particulate matter **32** and have a higher degree of rigidity than the conductive particulate matter **32.**

### (Second Modified Example)

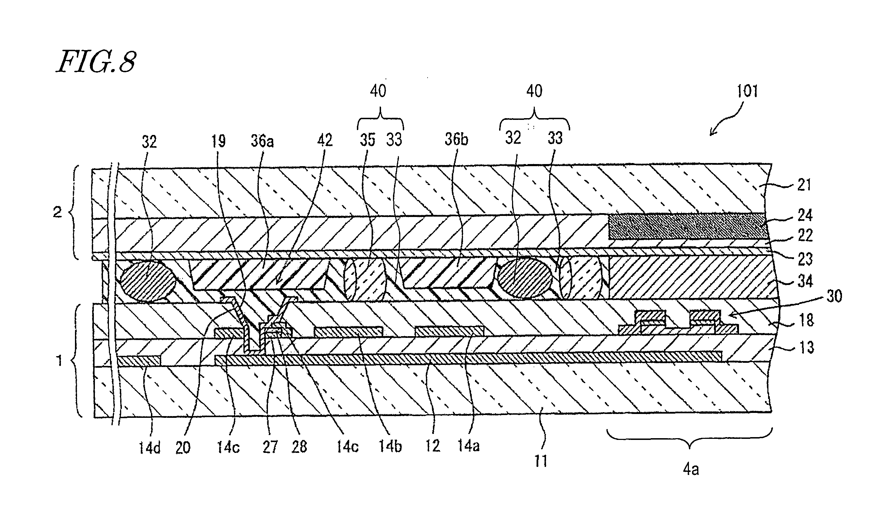

FIG. **8** is a cross-sectional view showing a general configuration of a second modified example of the liquid crystal module **101.** As shown in FIG. **8****,** the second modified example of the liquid crystal module **101** has a conduction preventing member **36 (36a, 36b),** instead of the above-described conduction preventing member **31.** In the following description, if there is a necessity that the conduction preventing members **36a** and **36b** are distinctly explained, the reference numerals **36a** and **36b** are used, and if the conduction preventing members **36a** and **36b** are commonly described, the reference numeral **36** is used.

Similarly to the conduction preventing member **31,** the conduction preventing member **36** is disposed so as to protrude from the counter substrate **2,** but the height of the conduction preventing member **36** is smaller than the magnitude of the cell gap between the active matrix substrate **1** and the counter substrate **2** (i.e., the height of the photo spacer in the pixel region **3).** The height of the conduction preventing member **36** preferably satisfies the condition **(a)** that when the active matrix substrate **1** and the counter substrate **2** are bonded together by the sealing material **40,** the end face of the conduction preventing member **36** will not be in contact with the electrode film **19.** By satisfying the condition **(a),** the end face of the conduction preventing member **36** is not strongly in contact with the electrode film **19** when the substrates are bonded together. As a result, contact failure caused by the rupture of electrode film **19** can be prevented.

Moreover, the height of the conduction preventing member **36** is more preferably determined by the second condition **(b)** that even if the conductive particulate matter **32** enters between the end face of the conduction preventing member **36** on the side of the active matrix substrate **1** and the electrode film **19,** the gap between the active matrix substrate **1** and the counter substrate **2** is not affected, in addition to the condition **(a).** By satisfying the condition **(b),** the gap between the active matrix substrate **1** and the counter substrate **2** can be kept uniform.

As described above, in the second modified example, the height of the photo spacer (or the cell gap) of the pixel region **3** is different from the height of the conduction preventing member **36.** However, in this case, the conduction preventing member **36** can be simultaneously formed from the same material as that of the photo spacer in the pixel region **3.** For example, as for a positive-type photosensitive acrylic resin, the exposed portion is dissolved in development. Thus, the positive-type photosensitive acrylic resin has a characteristic that the depth of recessed portion formed by etching is varied depending on the amount of exposure. By utilizing the characteristic, the positive-type photosensitive acrylic resin is applied on the electrode film **23** of the counter substrate **2,** and a photo mask (a so-called halftone mask) in which films having mutually different transmittances are partially arranged or a slit is provided is used, both of the conduction preventing member **36** and the photo spacer can be formed simultaneously so as to have mutually different thicknesses by using the single mask. Thus, the production efficiency is improved.

As described above, for example, in the case of the vertical alignment type liquid crystal display or the like, in addition to the photo spacer to keep the gap between the active matrix substrate **1** and the counter substrate **2** uniform (to define the cell gap), an alignment regulating structure to define the alignment condition of liquid crystal may sometimes be included in the pixel region **3.** The height of the alignment regulating structure is generally lower than the height of the photo spacer to define the cell gap. In this case, the conduction preventing member **36** is preferably formed by using the same material as that of the alignment regulating structure, so as to have the same height.

In the example shown in FIG. **8****,** the configuration in which both of the conduction preventing member **36a** provided in the contact portion **42** and the conduction preventing member **36b** provided in the portion other than the contact portion **42** are formed so as to be lower than the cell gap is exemplarily shown. However, the heights of the conduction preventing member **36a** and the conduction preventing member **36b** are not necessarily equal. For example, as described above, in the case where the photo spacer and the alignment regulating structure are provided in the pixel region **3,** the conduction preventing member **36b** may be formed from the same material as that of the photo spacer so as to have the same height, and the conduction preventing member **36a** may be formed from the same material as that of the alignment regulating structure so as to have the same height.

Herein the conduction preventing member **36** may be formed from a material different from that of the photo spacer, and may be formed in a process step different from that of the photo spacer. In addition, the conduction preventing member **36** may be formed from a material different from that of the alignment regulating structure, and may be formed in a process step different from that of the alignment regulating structure.

In FIG. **8****,** the example in which the glass fiber **35** is mixed in the sealing material **40** is exemplarily shown. However, the glass fiber **35** is not necessarily required in the second modified example.

Herein the modified example of the liquid crystal module **101** in the second embodiment is described. Alternatively, in the liquid crystal module **100** in the first embodiment, it is possible to include the conduction preventing member **36** instead of the conduction preventing member **31.** With such a configuration, the same effects can be attained.

### (Third Modified Example)

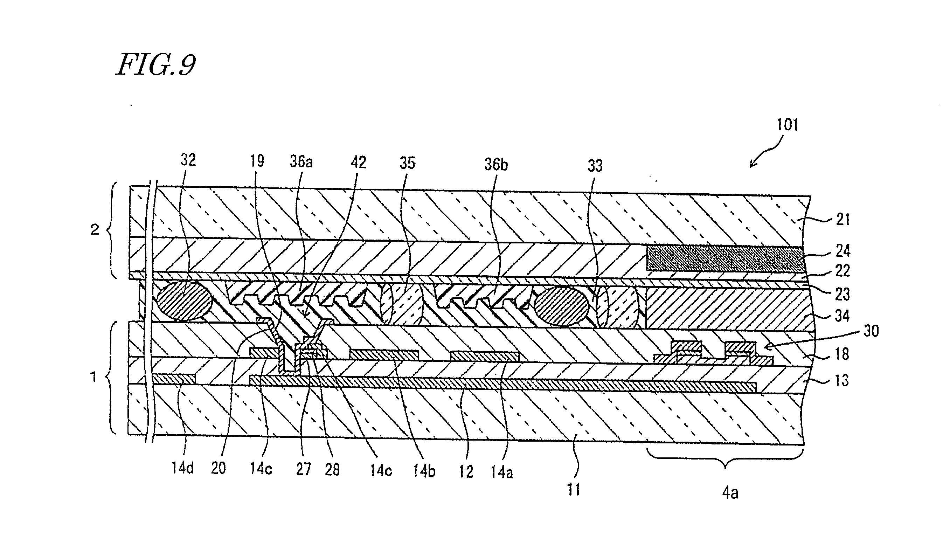

FIG. **9** is a cross-sectional view showing a general configuration of a third modified example of the liquid crystal module **101.** As shown in FIG. **9****,** the third modified example of the liquid crystal module **101** has the configuration in which concave and convex are provided on an end face of the conduction preventing member **36** in the second modified example on the side of the active matrix substrate **1.**

The concave and convex on the end face of the conduction preventing member **36** can be realized by providing a plurality of small regions with mutually different light transmittances in a photo mask corresponding to the end face when the conduction preventing member **36** is patterned by photolithography. For example, in the case where the conduction preventing member **36** is formed by a positive-type photosensitive resin, a mask portion with lower light transmittance may be assigned to a portion of the end face of the conduction preventing member **36** to be the convex portion, and a mask portion with higher light transmittance may be assigned to a portion to be the concave portion.

It is preferred that the concave and convex of the end face of the conduction preventing member **36** are formed roughly and deeply as much as possible. With such a configuration, even if the thermosetting resin **33** or the conductive particulate matter **32** of the sealing material **40** enters between the end face of the conduction preventing member **36** and the active matrix substrate **1** when the active matrix substrate **1** and the counter substrate **2** are bonded together, the entered substance can be absorbed in the concave portion. As a result, even if the sealing material **40** enters between the end face of the conduction preventing member **36** and the active matrix substrate **1,** it is difficult for the gap between the active matrix substrate **1** and the counter substrate **2** to vary, so that the gap between the substrates can be maintained to be a desired value.

Also in FIG. **9****,** the example in which the glass fiber **35** is mixed in the sealing material **40** is shown, but the glass fiber **35** is not necessarily required in the third modified example.

Alternatively, the concave and convex may be formed on an end face (an end face on the side of the active matrix substrate **1** or on the side of the counter substrate **2)** of the conduction preventing member **31** having substantially the same height as that of the cell gap (see the first modified example) in the normal direction of substrate surface.

### (Fourth Modified Example)

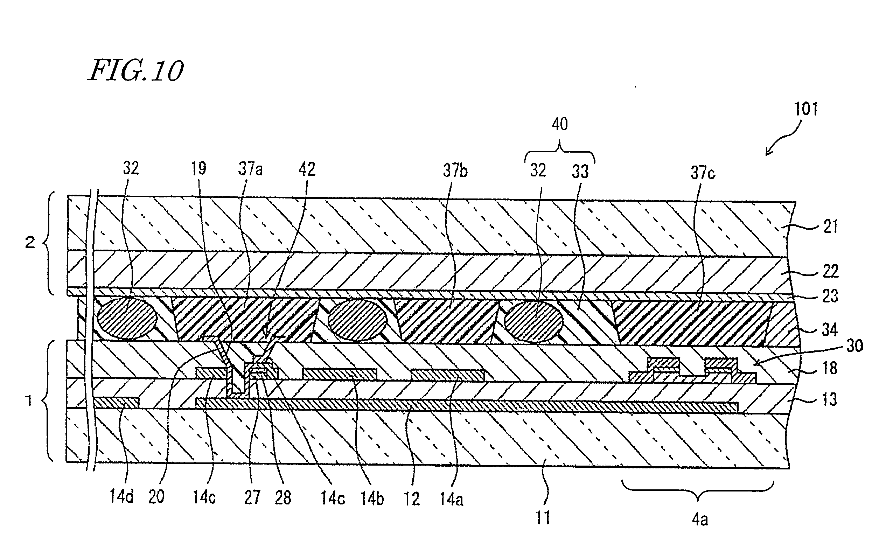

FIG. **10** is a cross-sectional view showing a general configuration of a fourth modified example of the liquid crystal module **101.** As shown in FIG. **10****,** in the fourth modified example of the liquid crystal module **101,** as the conduction preventing member **31,** a conduction preventing member **37 (37a** to **37c)** which is colored to black so as not to transmit light is provided. In the following description, in the case where the conduction preventing members **37a** to **31c** should be distinctly explained, the reference numerals **37a** to **37c** are used, but in the case where the conduction preventing members **37a** to **37c** should be commonly described, the reference numeral **37** is used. The conduction preventing member **37** can be produced by a photosensitive acrylic resin which is colored to black.

Herein the conduction preventing member **37** can be formed from the same material and by the same process step as those of the photo spacer in the pixel region **3.** However, the conduction preventing member **37** may be alternatively formed from a material different from that of the photo spacer, and may be formed by a process step different from that of the photo spacer.

By the provision of the conduction preventing member **37c** (the second conduction preventing member) above the TFT **30** of the gate driver **4a,** the light blocking layer **24** of the counter substrate **2** (see FIG. **3****)** is not required. The conduction preventing member **37c** does not necessarily cover the entire of the TFT **30,** but it is sufficient that the conduction preventing member **37c** acts so that light is not incident at least on the channel region.

In this modified example, the glass fiber **35** may be mixed in the sealing material **40.**

Instead of the conduction preventing member **31** of the liquid crystal module **100** in the first embodiment, the conduction preventing member **37** may be used. With such a configuration, the same effects can be attained.

### (Fifth Modified Example)

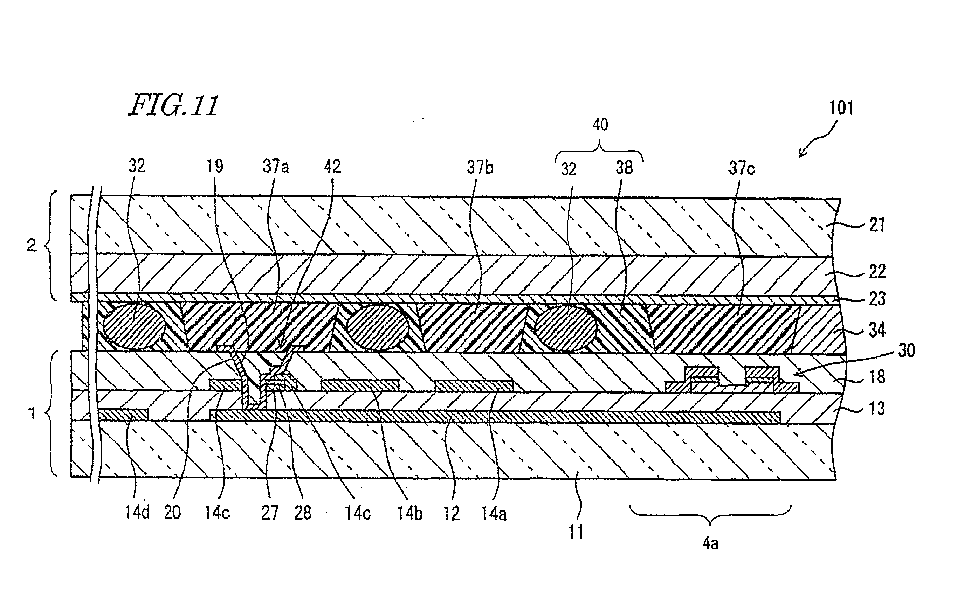

FIG. **11** is a cross-sectional view showing a general configuration of a fifth modified example of the liquid crystal module **101.** As shown in FIG. **11****,** the fifth modified example of the liquid crystal module **101** is different from the forth modified example in that as the base material of the sealing material **40,** a thermosetting resin **38** colored to black is used instead of the transparent thermosetting resin **33.**

Similarly to the fourth modified example, by the provision of the black conduction preventing member **37c** above the TFT **30** of the gate driver **4a,** the light blocking layer **24** on the side of the counter substrate **2** (see FIG. **3****)** is not required. The conduction preventing member **37c** does not necessarily cover the entire of the TFT **30,** but it is sufficient that the conduction preventing member **37c** may be positioned so that light is not incident at least on the channel region.

Instead of the provision of the conduction preventing member **37c** above the TFT **30,** the sealing material **40** may be extended above the TFT **30.** In such a case, the channel region of the TFT **30** is covered with the black thermosetting resin **38,** so that it is possible to prevent the characteristic deterioration of the TFT **30** without the light blocking layer **24** of the counter substrate **2.** In addition, for example, in the case where the width of the sealing material **40** is larger than the width of the main wiring region, the area of the frame region can be advantageously reduced, not by causing the sealing material to protrude on the outside of the main wiring region, but by forming the sealing material **40** above the gate driver **4a.**

Also in the fifth modified example, the glass fiber **35** may be mixed in the sealing material **40.**

### (Sixth Modified Example)

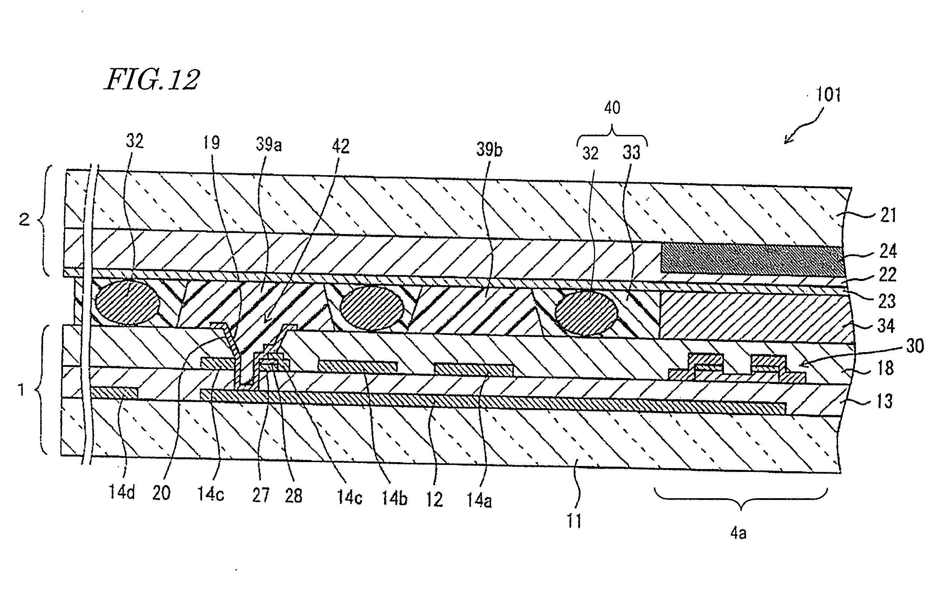

FIG. **12** is a cross-sectional view showing a general configuration of the sixth modified example of the liquid crystal module **101.** As shown in FIG. **12****,** the sixth modified example of the liquid crystal module **101** is characterized in that the conduction preventing member **39 (39a, 39b)** is provided not on the side of the counter substrate **2** but on the side of the active matrix substrate **1.** Specifically, before the active matrix substrate **1** and the counter substrate **2** are bonded together, the conduction preventing member **39** is formed on the side of the active matrix substrate **1.** In this modified example, the photo spacer of the pixel region **3** is also provided on the side of the active matrix substrate **1,** and the conduction preventing member **39** is preferably formed simultaneously by using the same material as that of the photo spacer of the pixel region **3.** Alternatively, the conduction preventing member **39** may be formed from a material different from that of the photo spacer, and may be formed by a different process step from that of the photo spacer.

Also in this modified example, the glass fiber **35** may be mixed in the sealing material **40** (see the first modified example). Alternatively, the height of the conduction preventing member **39** may be smaller than the cell gap (see the second modified example). In addition, the end face of the conduction preventing member **39** on the side of the counter substrate **2** may have concave and convex (see the third modified example). Moreover, the conduction preventing member **39** may be colored to black (see the fourth modified example), and the employed sealing material **40** may include a black thermosetting resin as its base material (see the fifth modified example).

Alternatively, the conduction preventing member **39** may be used instead of the conduction preventing member **31** in the liquid crystal module **100** of the first embodiment. With such a configuration, the same effects can be attained.

### EMBODIMENTS

Next, preferred embodiments of the liquid crystal display device according to the present invention will be described together with the production process thereof. Herein the liquid crystal display device **101** in the second modified example of the second embodiment shown in FIG. **8** is exemplarily described. That is, in the example described below, the conduction preventing member **36** having the height smaller than the cell gap is provided on the side of the counter substrate **2.** In addition, the glass fiber **35** is mixed in the sealing member **40** (see FIG. **8****),** but this is not essential.

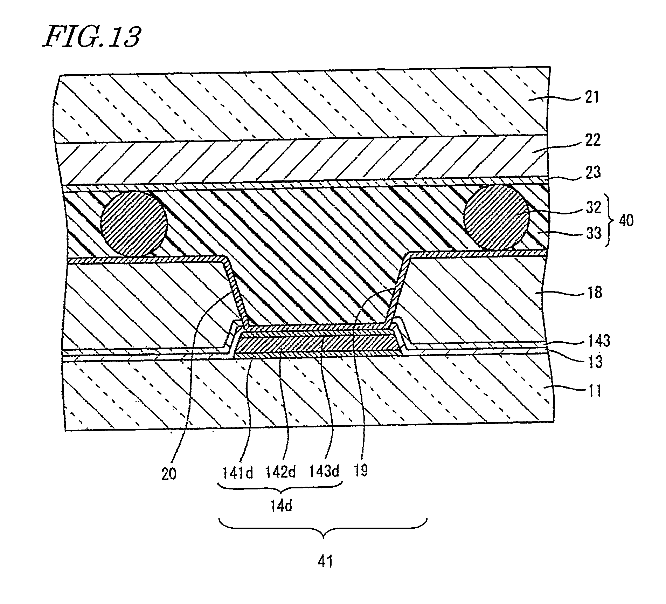

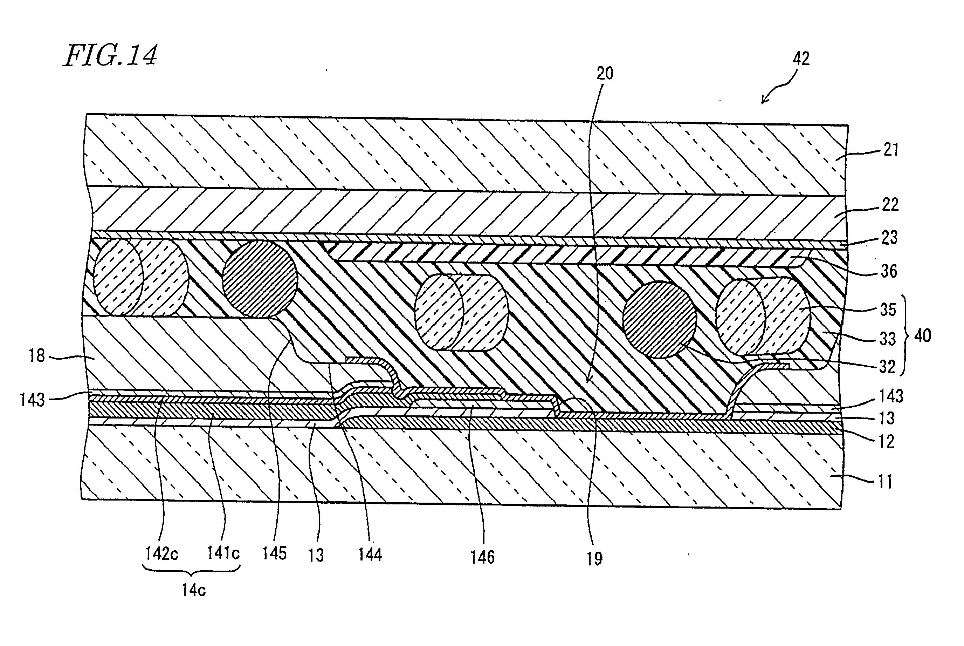

FIG. **13** is a cross-sectional view showing the configuration in the vicinity of the conductive portion **41** (see FIG. **4****)** in the liquid crystal display device **101** of the second modified example in more detail. FIG. **14** is a cross-sectional view showing the configuration in the vicinity of the contact portion **42** also in the second modified example in more detail. FIG. **15** illustrates the configuration of a section taken along a line **D-D** shown in FIG. **1** (the sectional configuration of a pixel).

As shown in FIG. **13****,** the main wiring **14d** in the present embodiment has a three-layer structure including a titanium layer **141d** as a lower layer, an aluminum layer **142d** as a middle layer, and a titanium layer **143d** as an upper layer. The gate wiring **6** in the pixel region **3** which is simultaneously formed with the main wiring **14d** has the same structure as that of the main wiring **14d.** The electrode film **19** is formed by ITO similarly to the pixel electrode **43** in the pixel region **3.** Although not shown in FIG. **5****,** the interlayer insulating film **13** and a passivation film **143** formed on the interlayer insulating film **13** are provided on the active matrix substrate **1,** as shown in FIG. **13****.** The passivation film **143** is a silicon nitride film which can attain such effects that the characteristic deterioration of active elements is prevented. In addition, above the passivation film **143,** the interlayer insulating film **18** of a photosensitive acrylic resin is provided. The thickness of the interlayer insulating film **18** is about 2 to 4 *µ*m in the thickest position.

Next, the configuration of the contact portion **42** in the present embodiment will be described with reference to FIG. **14****.** As shown in FIG. **14****,** in the contact portion **42,** the gate wiring **12** has a three-layer structure in which a titanium layer, an aluminum layer, and a titanium layer are successively layered, which are omitted in the figure. The gate wiring **6** in the pixel region **3** which is simultaneously formed with the gate wiring **12** has the same structure as that of the gate wiring **12.** As described above, as the interlayer insulating film **13,** a silicon nitride film may be used. The main wiring **14c** has a two-layer structure including a titanium layer **141c** as a lower layer and an aluminum layer **142c** as an upper layer, and is formed by the same process step as that of the source wiring **5** in the pixel region **3.**

The contact portion **42** has, as shown in the figure, a region in which the gate wiring **12,** the interlayer insulating film **13,** and an amorphous silicon film **146** are laminated between the glass substrate **11** and the electrode film **19.** The contact portion **42** also has a region in which the gate wiring **12,** the interlayer insulating film **13,** the amorphous silicon film **146,** and the titanium layer **141c** are laminated between the glass substrate **11** and the electrode film **19,** and a region in which the gate wiring **12,** the interlayer insulating film **13,** the titanium layer **141c,** the aluminum layer **142c,** the passivation film **143,** and the interlayer insulating film **18** are laminated between the glass substrate **11** and the electrode film **19.**

As for the main wiring **14c** shown in FIG. **14****,** in the portion connected to the electrode film **19,** the upper layer (i.e., the aluminum layer **142c)** of the main wiring **14c** is removed by etching, so that the titanium layer **141c** is in contact with the electrode film **19.** Although not shown in FIG. **8****,** it is preferable to provide the passivation film **143** which covers the interlayer insulating film **13** and the main wiring **14.** The passivation film **143** is a silicon nitride film.

In addition, on the passivation film **143,** the interlayer insulating film **18** of a photosensitive acrylic resin is provided. The interlayer insulating film **18** has the thickness of about 2 to 4 *µ*m in the thickest portion thereof. The electrode film **19** is electrically in contact with the titanium layer **141c** of the main wiring **14c** and the gate wiring **12** in the through hole **20** (hereinafter also referred to as a contact hole **20).**

In the preferred embodiment shown in FIG. **14****,** a stepped portion **144** is provided in the contact hole **20** of the interlayer insulating film **18,** and a gently sloping face **145** is formed between the open end of the contact hole **20** and the stepped portion **144.** The stepped portion **144** is a portion which is formed at a lower level than the uppermost surface of the interlayer insulating film **18.** The electrode film **19** is extended from the bottom portion of the contact hole **20** to the middle of the stepped portion **144.** As described above, the end portion of the electrode film **19** is positioned on the stepped portion **144,** and does not reach the sloping face **145** and the surface of the interlayer insulating film **18,** so that it is possible to surely secure the distance between the electrode film **19** and the electrode film **23** of the counter substrate. Accordingly, there is an advantage that short circuit between the electrode film **19** of the active matrix substrate **1** and the electrode film **23** of the counter substrate **2** can be prevented. In addition, since the passivation film **143** and the interlayer insulating film **18** are interposed between the main wiring **14c** and the electrode film **19,** it is possible to prevent electrolytic corrosion of the ITO as the electrode film **19** and the aluminum layer **142c** of the main wiring **14c.**

By forming the gently sloping face **145** from the opening portion of the contact hole **20** to the inside thereof, the margin for positioning precision in bonding or the like can be enlarged as compared with the case where the contact hole **20** has a steep or vertical inner wall.

The thickness of the conduction preventing member **36** is determined so that the thickness does not substantially vary the gap between the active matrix substrate **1** and the counter substrate **2** even when the conductive particulate matter **32** enters between the end face of the conduction preventing member **36** on the side of the counter substrate **2** and the electrode film **19,** as described above. For example, when the thickness of the interlayer insulating film **18** is about 2.5 *µ*m in the thickest portion thereof, the diameter in section of the glass fiber **35** is about **3** *µ*m, and the diameter of the conductive particulate matter **32** is about 4 *µ*m, the sum of the thickness of the interlayer insulating film **18** and the diameter in section of the glass fiber **35** is about 5.5 *µ*m. If the sum of the thickness of the conduction preventing member **36** and the thickness of the conductive particulate matter **32** is smaller than that value, it is possible to prevent the variation of gap between the substrates, so that it is preferred that the height of the conduction preventing member **36** is smaller than about 1.5 *µ*m. In this case, the height of the conduction preventing member **36** is about 1.0 *µ*m.

Next, with reference to FIG. **15****,** a photo spacer **53** in the pixel region **3** will be described. FIG. **15** is a cross-sectional view taken along a line **D-D** shown in FIG. **1****.** As shown in FIG. **15****,** in the pixel region **3,** the photo spacer **53** to regulate the cell gap is formed above the source wiring **5.** In addition, a black matrix (BM) **149** is provided above the photo spacer **53.**

When viewed from the normal direction of substrate surface of the counter substrate **2,** the black matrix **149** is provided on the boundary among a red color filter **150R,** a green color filter **150G,** and a blue color filter **150B,** so as to overlap the photo spacer **53** and the source wiring **5** blow the photo spacer **53.** The red color filter **150R,** the green color filter **150G,** and the blue color filter **150B** are disposed so as to overlap the region in which the pixel electrode **43** is provided (the pixel opening portion), respectively.

The thickness of the black matrix **149** is about 1 *µ*m, the thickness of each of the red color filter **150R,** the green color filter **150G,** and the blue color filter **150B** is about 2 *µ* m, and the thickness of the overcoat film **22** on the color filters is about 0.5 *µ*m.

The source wiring **5** of the pixel region **3** has a layered structure of a titanium layer **51** and an aluminum layer **52,** similarly to the afore-mentioned main wiring **14.** On the interlayer insulating film **13** and the source wiring **5,** the passivation film **143** is layered. On the passivation film **143,** the interlayer insulating film **18** of a photosensitive acrylic resin is layered. The thickness of the interlayer insulating film **18** is about 2.5 *µ*m in the thickest portion thereof. The surface of the interlayer insulating film **18** is substantially even. On the interlayer insulating film **18,** a plurality of pixel electrodes **43** are arranged in matrix. On the pixel electrode **43,** an alignment film **147** is formed.

On the other hand, in the counter substrate **2,** the glass substrate **21,** the color filters **150R, 150G,** and **105B** of respective colors, the black matrix **149,** the overcoat film **22,** and the electrode film **23** are layered in this order. The electrode film **23** is a common electrode formed by ITO. The thickness of the electrode film **23** is about 0.1 *µ*m. On the electrode film **23,** a photo spacer **53** of a photosensitive acrylic resin is formed. The alignment film **148** is formed so as to cover the electrode film **23** and the photo spacer **53.** The thicknesses of the alignment films **147** and **148** are about 100 nm, respectively.

The line width of one source wiring **5** is about 2 to 3 *µ*m, and the line widths of the photo spacer **53** and the black matrix **149** which overlap the source wiring **5** are also about 2 to 3 *µ*m. The height of the photo spacer **53** is about 3 *µ*m. This is substantially equal to the diameter in section of the glass fiber **35** to define the thickness of the sealing material **40.**

The conduction preventing member in the region on the outside of the pixel region is preferably formed by using the same material and by the same process step as those of the photo spacer **53,** thereby simplifying the production process.

As described in the first embodiment and the second embodiment, as the projecting structure provided in the pixel region **3,** an alignment regulating structure to define the alignment condition of liquid crystal may sometimes be formed other than the photo spacer to define the gap between the substrates. The alignment regulating structure is used, for example, in a vertical alignment type liquid crystal module, or the like. Herein, a specific exemplary configuration of the alignment regulating structure will be described with reference to FIG. **16****.**

As shown in FIG. **16****,** an alignment regulating structure **81** is formed as a projecting structure which is lower than the photo spacer **53** in a pixel region of a vertical alignment type liquid crystal module. In the example shown in FIG. **16****,** alignment films **147** and **148** are vertical alignment films to cause the liquid crystal molecules to align vertically with respect to the substrate surface. In this example, the alignment regulating structure **81** is provided on the side of the counter substrate **2** in the vicinity of the center of each pixel, so as to cause the liquid crystal molecules **341** around it to radially align in an inclination manner. The alignment regulating structure **81** is formed on the electrode film **23** similarly to the photo spacer **53.** Accordingly, the surface of the alignment regulating structure **81** is covered with the vertical alignment film **148.** With such a configuration, due to the anchoring effect of the vertical alignment film **48** provided on an inclined surface **81s** of the alignment regulating structure **81,** the liquid crystal molecules **341** are aligned substantially vertically with respect to the inclined surface **81s**.

As a result, in the vicinity of the alignment regulating structure **81,** the liquid crystal molecules **341** are aligned radially in an inclination manner around the alignment regulating structure **81.** Herein the alignment regulating structure **81** is formed so as to have a truncated cone shape. Alternatively, the shape may be selected from various shapes such as a cone or a triangular pyramid.

As described above, in the case of using the alignment regulating structure **81,** the conduction preventing member **31** may be formed from the same material and by the same process step as those of the alignment regulating structure **81,** thereby advantageously simplifying the production process.

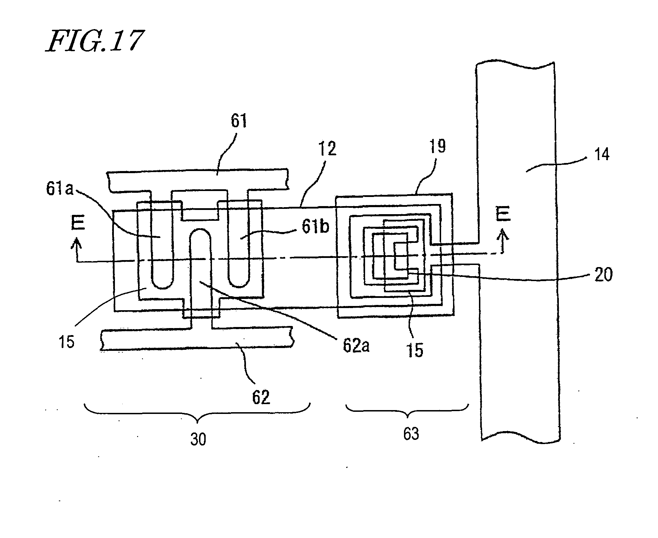

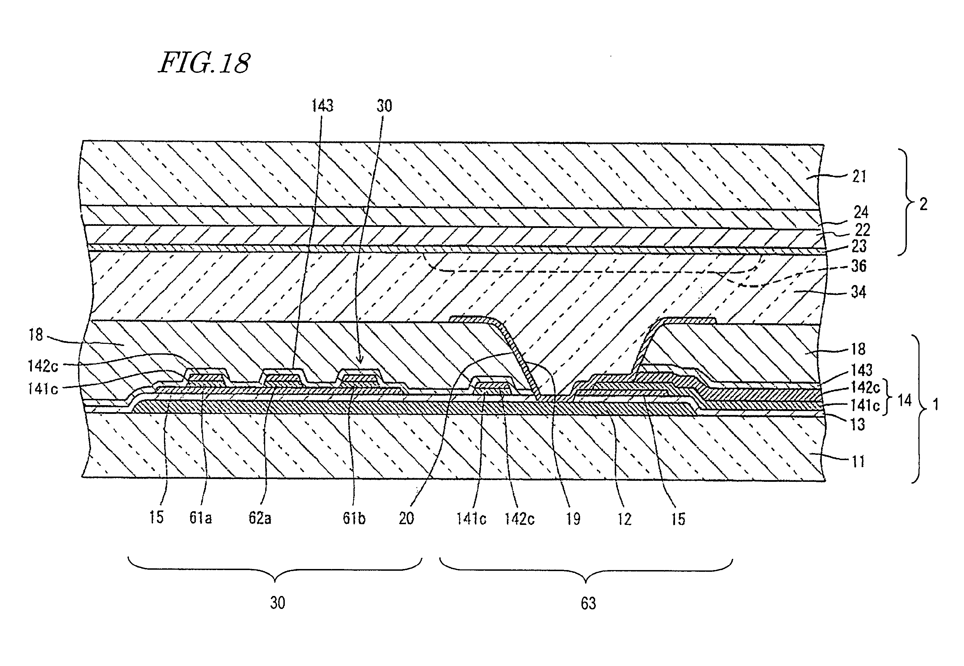

Next, with reference to FIG. **17** and FIG. **18****,** the TFT **30** in the gate driver **4a** and the contact portion **63** will be described. FIG. **17** is a plan view schematically showing the configuration of the TFT **30** in the gate driver **4a** and the contact portion **63** arranged in the vicinity thereof. FIG. **18** is a cross-sectional view taken along a line **E-E** shown in FIG. **17****.** Herein, the configuration of the gate driver **4a** is described, but the gate driver **4b** may also have the same configuration.

In the example shown in FIG. **17** and FIG. **18****,** the TFT is a comb-shaped TFT, but a switching element in the gate driver **4a** is not limited to this. As shown in FIG. **17** and FIG. **18****,** in the gate driver **4a,** an interlayer insulating film **13** is provided on the gate wiring **12,** and a silicon layer **15** of n⁺ silicon or the like, a drain wiring **61,** a source wiring **62,** and the like are formed thereon. The drain wiring **61** and the source wiring **62** are wirings formed in the gate driver **4a** from the same material as that of the main wiring **14** and the source wiring **5** in the pixel region **3** simultaneously with the source wiring **5.** The main wiring **14,** the drain wiring **61,** and the source wiring **62** have a two-layer structure of a titanium layer **141c** and an aluminum layer **142c,** for example.

As shown in FIG. **17** and FIG. **18****,** two electrodes extended from the drain wiring **61** constitute drain electrodes **61a** and **61b** of the TFT **30,** and one electrode extended from the source wiring **62** constitutes the source electrode **62a.** On the drain wiring **61** and the source wiring **62,** a passivation film **143** is layered. On the passivation film **143,** the interlayer insulating film **18** is layered. The through hole **20** is provided in the interlayer insulating film **18** and the interlayer insulating film **13.** The electrode film **19** is continuously layered on the wall faces of the interlayer insulating film **13** and the interlayer insulating film **18** in the through hole **20,** an exposed portion of the main wiring **14,** and the gate wiring **12** exposed in the bottom portion of the through hole **20.** With such a configuration, the gate wiring **12** and the main wiring **14** are electrically connected in the contact portion **63.** In the case where the silicon layer **15** and the passivation layer **143** are exposed in the through hole **20,** the electrode film **19** is also formed on the exposed faces thereof.

As shown in FIG. **18****,** between the active matrix substrate **1** and the counter substrate **2** in the gate drivers **4a** and **4b,** the sealing material **40** does not exist. In the present embodiment, the sealing material **40** contains a photosensitive resin as its base material, and the sealing material **40** is temporarily hardened with the radiation of light to the photosensitive resin in the production process. However, the irradiation of the TFT **30** with light may deteriorate the channel characteristics. For this reason, if the sealing material **40** is to be formed on the TFT **30,** the TFT **30** is irradiated with light in the production process, so that there arises a problem that the characteristics of the TFT **30** are deteriorated. In the present embodiment, the sealing material **40** does not exist on or above the TFT **30,** so that the deterioration in characteristics of the TFT **30** can be prevented.

For the same reason, it is not preferred that the TFT **30** may be irradiated with external light after the completion of the liquid crystal display device. Therefore, in the present embodiment, a light blocking layer **24** is formed above the gate drivers **4a** and **4b.**

However, in the case where the sealing material **40** does not exist between the active matrix substrate **1** and the counter substrate **2,** even if a force for mutually pressing the active matrix substrate **1** and the counter substrate **2** is applied (for example, when the liquid crystal panel is pressed externally by means of a finger, or the like), the electrode film **19** of the active matrix substrate **1** and the electrode film **23** of the counter substrate **2** may come into contact with each other, so as to be short-circuited. In order to prevent this problem, as shown by a dashed line in FIG. **18****,** a conduction preventing member **36** is preferably provided on the counter substrate **2** above the contact portion **63.** Instead of the conduction preventing member **36,** a conduction preventing member (corresponding to the above-mentioned conduction preventing member **31a)** having the same height as that of the photo spacer to define the cell gap or the alignment condition of liquid crystal may be provided. As described in the fourth modified example, a black conduction preventing member may be provided. Alternatively, as described in the sixth modified example, the conduction preventing member **36** may be provided on the side of the active matrix substrate **1.**

The conduction preventing member **36** may be formed from a different material from that of the photo spacer, and formed by a different process step from that of the photo spacer. In addition, the conduction preventing member **36** may be formed from a different material from that of the above-mentioned alignment regulating structure, or formed by a different process step from that of the alignment regulating structure.

Next, the production method of the liquid crystal module **101** will be described. In the following description, except when explicitly noted otherwise, the production processes of respective components of the liquid crystal module **101** shown in FIG. **5** will be described with reference to FIG. **5****.** The production method of the respective components can be essentially applied to the similar components in other embodiments and examples.

First, the production process of the active matrix substrate **1** will be described. After a glass substrate **11** is first washed and dried up, a titanium layer, an aluminum layer, and a titanium layer are sequentially layered on the surface of the glass substrate **11** by sputtering. Next, the three layers are shaped by photolithography and dry etching, thereby forming a gate wiring **12** (a first wiring).

Thereafter, on the glass substrate **11** so as to cover the gate wiring **12,** a silicon nitride film which will constitute an interlayer insulating film **13** (a first insulating layer), and an amorphous silicon film and an n⁺ amorphous silicon film which will constitute a semiconductor layer of a TFT **7** of a pixel region **3** are successively formed by plasma CVD, respectively. Next, by photolithography and dry etching, the amorphous silicon film and the n⁺ amorphous silicon film are patterned, thereby obtaining a semiconductor layer disposed in the form of an island in the TFTs **7** and **30.**

Next, a titanium layer and an aluminum layer are sequentially deposited by sputtering. Thereafter, these two layers are patterned by photolithography, wet etching, and dry etching, thereby forming a source wiring **5,** a source electrode, and a drain electrode in the pixel region **3,** a main wiring **14,** a drain wiring **61** and a source wiring **62** in gate drivers **4a** and **4b,** and drain electrodes **61a** and **61b** and a source electrode **62a** of the TFT **30.** The main wiring **14,** the drain wiring **61,** and the source wiring **62** are referred to as second wirings.

Next, after a silicon nitride film which will constitute a passivation film **143** is layered by plasma CVD, an acrylic resin which will constitute an interlayer insulating film **18** is applied. Thereafter, the layers from the interlayer insulating film **18** to the interlayer insulating film **13** are selectively removed by photolithography and dry etching, thereby forming a contact hole (a through hole) **20** shown in FIG. **5** to FIG. **14** and FIG. **18****.** At this time, the aluminum layer of the source wiring **5** and the main wiring 14 positioned in the contact hole **20** may be removed by wet etching. This can prevent electrolytic corrosion from occurring between the aluminum layer of these wirings and ITO of an electrode film **19.**

Next, a film of ITO is formed by sputtering and etched, thereby forming a pixel electrode **43** in the pixel region **3** and the electrode film **19.** Next, an alignment film **147** is formed in the pixel region **3,** so as to complete the active matrix substrate **1.**

As a last step of the production process of the active matrix substrate, the step of forming a conduction preventing member may sometimes be added.

Next, the production process of the counter substrate **2** will be described.

After a glass substrate **21** is first washed and dried up, color filters **150R, 150G,** and **150B** are formed in a region which will constitute the pixel region **3.** Simultaneously, in a position above the source wiring **5,** and in a position above the gate drivers **4a** and **4b,** a black matrix **149** is formed. Next, an overcoat film **22** is formed on the substrate. Thereafter, on a surface of the overcoat film **22,** a film of ITO is formed by sputtering, thereby obtaining an electrode film **23** (a common electrode).

Next, a photosensitive acrylic resin is applied to the surface of the electrode film **23,** thereby simultaneously forming a conduction preventing member **36** and a photo spacer **53** (see FIG. **15** and FIG. **16****)** by photolithography and dry etching. At this time, as described above, in the case where the height of the conduction preventing member **36** and the height of the photo spacer **53** are made different, it is sufficient to use a photo mask in which transmittances in a position corresponding to the conduction preventing member **36** and in a position corresponding to the photo spacer **53** are mutually different. Next, an alignment film **148** is formed so as to cover the electrode film **23** and the photo spacer **53** in the pixel region **3,** thereby completing the counter substrate **2.** Alternatively, an alignment regulating member **8** shown in FIG. **16** may be simultaneously formed from an acrylic resin, similarly to the conduction preventing member **36.**

Next, after a sealing material **40** is applied in a predetermined position including a part of a peripheral region of the counter substrate **2,** and liquid crystal is dropped and filled in the region surrounded by the sealing material **40,** the counter substrate **2** and the active matrix substrate **1** are bonded together. The sealing material **40** may contain a thermosetting resin **33** and one or both of the conductive particulate matter **32** and the glass fiber **35.** Next, in a condition where the positioning of the active matrix substrate **1** and the counter substrate **2** is performed, the sealing material **40** is irradiated with ultraviolet rays, and the sealing material **40** is temporarily hardened. Next, by heating the sealing material **40** up to a predetermined temperature, the sealing material **40** is completely hardened. The bonding is performed in such a manner that at least a part of the electrode film **19** of the active matrix substrate overlaps the conduction preventing member **36** when viewed from the substrate normal direction of the active matrix substrate.

By the above-mentioned process steps, the liquid crystal module (the substrates bonded together) **101** of the present embodiment is completed. The liquid crystal module **101** is installed in an appropriate housing, and a driving circuit, a power supply circuit, and the like which are required are attached, thereby obtaining the final form of the liquid crystal display device. In this application, the above-described liquid crystal module **101** is referred to as a liquid crystal display device of the present invention, but the above-mentioned final form of the liquid crystal display device is also referred to as a liquid crystal display device of the present invention.

The embodiments of the present invention are described above, but the above-described embodiments are only illustrative examples for embodying the present invention. Accordingly, the present invention is not limited to the above-described embodiments and examples, and it is possible to appropriately modify the above-described embodiments and examples in the range without escaping the scope of the invention.

For example, in the above-mentioned examples, glass substrates are used as the base substrates of the active matrix substrate **1** and the counter substrate **2,** but substrates other than the glass substrates may be used if the substrates are light-transmitting insulating substrates.

In FIG. **1****,** two gate drivers **4a** and **4b** are disposed on both sides of the pixel region **3,** but the number of gate drivers is not limited to two, and they can be disposed in different positions from those described above. Alternatively, in the example shown in FIG. **1****,** the terminal region **8** is formed in the vicinity of one longer side of the active matrix substrate **1,** but alternatively the terminal region **8** may be formed in the vicinity of a shorter side of the active matrix substrate **1.**

In the above description, the configuration in which the gate drivers **4a** and **4b** are disposed in a monolithic manner on the active matrix substrate **1** is exemplarily illustrated. In addition, a source driver can be installed in a monolithic manner on the active matrix substrate **1.** In this case, as the material of the semiconductor layer of the TFT, preferably, microcrystalline silicon, oxide semiconductor (e.g., IZO, IGZO), or the like which has higher mobility than the amorphous silicon may be used.

The microcrystalline silicon is generally fabricated by plasma CVD or the like which is the same method for forming the amorphous silicon film. As the material gas, a silane gas diluted by hydrogen gas is generally used. A grain diameter of a crystal grain contained in the microcrystalline silicon is small such as about several nanometers to several hundreds of nanometers, and the microcrystalline silicon is often formed in a mixed condition of crystal grains and amorphous silicon. In the case where a silicon film of low temperature crystallization is formed, it is necessary to first form a film of amorphous silicon, and then perform the crystallization by laser or heating. However, the microcrystalline silicon is characterized in that, when a film of microcrystalline silicon is completely formed by a CVD device or the like, the film already contains fundamental crystal grains. Accordingly, it is possible to omit a step of forming crystal grains by performing annealing with laser or heating after the formation of the film. Therefore, the crystallite silicon TFT can be fabricated by the reduced number of process steps than that required for forming the low temperature crystallization silicon TFT, and can be fabricated by substantially the same number of process steps and cost as those of the amorphous silicon TFT.

### INDUSTRIAL APPLICABILITY

The present invention is suitably applied to a liquid crystal cell and a liquid crystal display device provided with an active matrix substrate having a thin film transistor.

### REFERENCE SIGNS LIST

- 1: Active matrix substrate
- 2: Counter substrate
- 3: Pixel region
- 4: Gate driver
- 5: Source wiring
- 6: Gate wiring
- 7: TFT
- 8: Terminal region
- 11: Glass substrate
- 12: Gate wiring
- 14: Main wiring
- 19: Electrode film
- 20: Through hole
- 31: Conduction preventing member
- 36: Conduction preventing member
- 37: Conduction preventing member
- 39: Conduction preventing member
- 53: Photo spacer
- 81: Alignment regulating structure
- 100: Liquid crystal module
- 101: Liquid crystal module

## Claims

1. A liquid crystal display device including a pixel region in which a plurality of pixel electrodes are formed, and a peripheral region positioned on the outside of the pixel region, and comprising an active matrix substrate and a counter substrate having a common electrode, wherein
the active matrix substrate includes:
a first wiring extended to the peripheral region;
a first insulating layer formed on the first wiring;
a second wiring extended onto the insulating layer in the peripheral region;
a second insulating layer formed on the second wiring; and
an electrode film, disposed in a through hole formed in the first insulating layer and the second insulating layer in the peripheral region, to electrically connect the first wiring and the second wiring, and
between the active matrix substrate and the counter substrate in the peripheral region,
a sealing material to bond the active matrix substrate and the counter substrate together, and
a conduction preventing member, located in a position partially overlapping the electrode film, to prevent electrical conduction between the electrode film and the common electrode are provided.

2. The liquid crystal display device of claim 1, wherein the conduction preventing member is in contact with both of the electrode film and the common electrode.

3. The liquid crystal display device of claim 1, wherein the conduction preventing member is in contact with only one of the electrode film and the common electrode.

4. The liquid crystal display device of claim 1 or 3, wherein the conduction preventing member has an end face opposed to the active matrix substrate without being in contact with the active matrix substrate, and
concave and convex are formed on the end face of the conduction preventing member.

5. The liquid crystal display device of any of claims 1 to 4, comprising:
a driving circuit disposed on the active matrix substrate in the peripheral region; and
a second conduction preventing member, disposed between the active matrix substrate and the counter substrate in the peripheral region, and disposed in a position overlapping the driving circuit when viewed from a substrate normal direction of the active matrix substrate.

6. The liquid crystal display device of claim 5, wherein the second conduction preventing member is black, and
a channel region of the driving circuit and the second conduction preventing member are arranged to at least partially overlap when viewed from the substrate normal direction of the active matrix substrate.

7. The liquid crystal display device of any of claims 1 to 6, comprising a projecting structure provided between the active matrix substrate and the counter substrate in the pixel region, wherein
the conduction preventing member is formed from the same material as that of the projecting structure.

8. The liquid crystal display device of claim 7, wherein the projecting structure is a spacer to define a gap between the active matrix substrate and the counter substrate.

9. The liquid crystal display device of claim 7, wherein the projecting structure is an alignment regulating structure to regulate the alignment condition of liquid crystal.

10. The liquid crystal display device of any of claims 1 to 9, wherein the sealing material contains a conductive particulate matter, and
the sealing material is disposed between the electrode film and the common electrode of the counter substrate.

11. The liquid crystal display device of any of claims 1 to 10, wherein a stepped portion is formed on a surface of the second insulating layer in the through hole, and
an end portion of the electrode film is positioned on the stepped portion.

12. A production method of a liquid crystal display device including a pixel region in which a plurality of pixel electrodes are formed and a peripheral region positioned on the outside of the pixel region and comprising an active matrix substrate and a counter substrate having a common electrode, comprising the steps of:
forming a first wiring extended to the peripheral region on the active matrix substrate;
forming a first insulating layer on the first wiring of the active matrix substrate;
forming a second wiring extended to the peripheral region on the first insulating layer of the active matrix substrate;
forming a second insulating layer on the second wiring of the active matrix substrate;
forming a through hole in the first insulating layer and the second insulating layer in the peripheral region;
forming an electrode film to electrically connect the first wiring and the second wiring in the through hole;
forming a common electrode on the counter substrate;
forming a conduction preventing member to prevent electrical conduction between the electrode film and the common electrode on at least one of the active matrix substrate and the counter substrate; and
bonding the active matrix substrate and the counter substrate together by means of a sealing material in such a manner that at least part of the electrode film overlaps the conduction preventing member when viewed from a substrate normal direction of the active matrix substrate.

13. The production method of the liquid crystal display device of claim 12, comprising the step of forming a projecting structure from the same material as that of the conduction preventing material in the pixel region on at least one of the active matrix substrate and the counter substrate, wherein
the step of forming the projecting structure and the step of forming the conduction preventing member are simultaneously performed.

14. The production method of the liquid crystal display device of claim 13, wherein the projecting structure is a spacer to define a gap between the active matrix substrate and the counter substrate.

15. The production method of the liquid crystal display device of claim 13, wherein the projecting structure is an alignment regulating structure to regulate the alignment condition of liquid crystal.

16. The production method of the liquid crystal display device of any of claims 12 to 15, wherein a sealing material containing conductive particulate matter is used as the sealing material, and
the sealing material is disposed between the electrode film and the common electrode of the counter substrate.
